# EUROPEAN PATENT SPECIFICATION

(11) **EP 4 107 204 B1**
(45) Date of publication and mention of the grant of the patent: **10.04.2024**
(21) Application number: 21705558.1
(22) Date of filing: 19.02.2021
(51) Int. Cl.: C08G 65/26, C08G 63/68

(54) **ALKOXYLATED POLYALKYLENE IMINES OR ALKOXYLATED POLYAMINES WITH IMPROVED BIODEGRADABILITY**
ALKOXYLIERTE POLYALKYLENIMINE ODER ALKOXYLIERTE POLYAMINE MIT VERBESSERTER BIOLOGISCHER ABBAUBARKEIT
POLYALKYLÈNE-IMINES ALCOXYLÉES OU POLYAMINES ALCOXYLÉES À BIODÉGRADABILITÉ AMÉLIORÉE

(30) Priority: 21.02.2020 EP 20158733
(43) Date of publication of application: 28.12.2022
(73) Proprietor: BASF SE, 67056 Ludwigshafen am Rhein (DE)
(72) Inventor: EBERT, Sophia, 67056 Ludwigshafen (DE); TUERK, Holger, 67056 Ludwigshafen (DE); ENGERT, Susanne Carina, 67056 Ludwigshafen (DE); ESPER, Claudia, 67056 Ludwigshafen (DE); BENLAHMAR, Ouidad, 67056 Ludwigshafen (DE)
(74) Representative: BASF IP Association
(86) International application number: PCT/EP2021/054146
(87) International publication number: WO 2021/165468

(56) References cited:
- EP-A2- 2 611 885
- US-A- 4 960 540
- US-A1- 2013 231 418
- US-A1- 2015 122 742

## Description

The present invention relates to an alkoxylated polyalkylene imine or an alkoxylated polyamine according to the general formula (I) 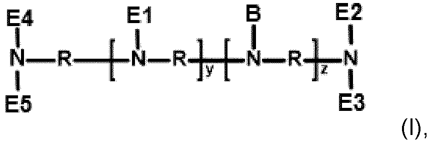 in which the variables E1 to E5, R, B, y and z are defined below.

Various states have already introduced initiatives to ban microplastics especially in cosmetic products. Beyond this ban of insoluble microplastic, there is an intense dialog on future requirements for soluble polymers used in consumer products. It is therefore highly desirable to identify new better biodegradable ingredients for such applications. This problem is predominantly serious for polymers produced by radical polymerization based on carbon-only backbones (a backbone not containing heteroatoms such as oxygen), since a carbon-only backbone is particularly difficult to degrade for microorganisms.

The present invention further relates to a process for preparing such alkoxylated polyalkylene imines or alkoxylated polyamines as well as to the use of such compounds within, for example, cleaning compositions and/or in fabric and home care products. Furthermore, the present invention also relates to those compositions or products as such.

WO 2015/028191 relates to water-soluble alkoxylated polyalkylene imines having an inner block of polyethylene oxide comprising 5 to 18 polyethylene oxide units, a middle block of polyalkylene oxide comprising 1 to 5 polyalkylene oxide units and an outer block of polyethylene oxide comprising 2 to 14 polyethylene oxide units. The middle block is formed from polypropylene oxide units, polybutylene oxide units and/or polypentene oxide units. In addition, WO 2015/028191 relates to water-soluble alkoxylated polyamines.

WO2020/187648 also relates to polyalkoxylated polyalkylene imines or alkoxylated polyamines according to a general formula (I). The compounds described therein may be employed within, for example, cosmetic formulations. However, the specific compounds disclosed within WO2020/187648 differ from the respective compounds of the present invention in respect of the definition of the substituents, such as E1 and E5, which are defined within the present invention according formulas (IIa) or (!!b). Such substituents according to formula (IIa) and/or (IIb) are not disclosed within WO2020/187648 .

GB-A 2 562 172 relates to specific functionalized polyalkylene imine polymers according to general formula (I), which compositions are employed as pigment dispersions. GB-A 2 562 172 does not disclose any alkoxylated polyalkylene imine or alkoxylated polyamines according to the general formula (I) of the present invention, wherein substituents, such as E1 to E5, are defined according to general formula (Ila) and/or formula (!!b).

WO 95/32272 describes ethoxylated and/or propoxylated polyalkylene amine polymers to boost soil dispersing performance, wherein said polymers have an average ethoxylation/propoxylation of from 0.5 to 10 per nitrogen. US2013231418 concerns the incorporation of lactones into crosslinked-modified polyols for demulsification.

EP2611885 discloses novel copolymers for use as oilfield demulsifiers.

The object of the present invention is to provide novel compounds based on a polyalkylene imine backbone or a polyamine backbone. Furthermore, those novel compounds should have beneficial properties when being employed within compositions in respect of their biodegradability.

The object is achieved by an alkoxylated polyalkylene imine or alkoxylated polyamine of the general formula (I) as indicated in the claims 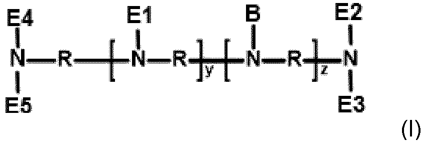 in which the variables are each defined as follows:
- R: represents identical or different, i) linear or branched C₂-C₁₂₋alkylene radicals or ii) an etheralkyl unit of the following formula (III): 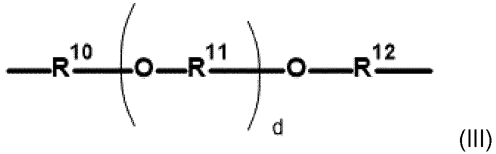 in which the variables are each defined as follows:
R¹⁰, R¹¹, R¹² represent identical or different, linear or branched C₂-C₆-alkylene radicals and
d is an integer having a value in the range of 0 to 50 or
iii) C₅-C₁₀-cycloalkylene radicals optionally substituted with at least one C₁-C₃-alkyl;
- B: represents a continuation of the alkoxylated polyalkylene imine by branching;
- y and z: are each an integer having a value in the range of 0 to 150, under the provisio that both z and y are 0 in case R are C₅-C₁₀-cycloalkylene radicals optionally substituted with at least one C₁-C₃-alkyl;
- E1, E2 and E4: represent an identical or different residue according to formula (Ila) or an identical or different residue according to formula (IIb),
wherein the residue according to formula (Ila) is an alkylenoxy unit defined as follows 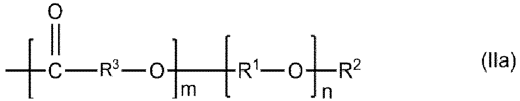 in which the variables are each defined as follows:
R¹ represents C₂-C₂₂-(1,2-alkylene) radicals;
R² represents hydrogen or C1-C4 alkyl or C₇-C₂₂-aralkyl in case z is an integer ≥ 1 within general formula (I), wherein said C7-C22-aralkyl comprises phenyl, naphthyl or anthracyl or
R² represents hydrogen or C₁-C₄-alkyl or C₇-C₂₂-aralkyl in case z is 0 within general formula (I); wherein said C7-C22-aralkyl comprises phenyl, naphthyl or anthracyl;
R³ represents linear or branched C₁-C₂₂-alkylene radicals;
m is an integer having a value of at least 1 to 10;
n is an integer having a value of at least 5 to 100; and wherein the residue according to formula (IIb) is an alkylenoxy unit defined as follows 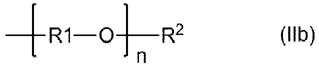 in which the variables are defined as follows:
R¹ represents C₂-C₂₂-(1,2-alkylene) radicals;
R² represents hydrogen or C1-C4-alkyl or C₇-C₂₂-aralkyl;
n is an integer having a value of at least 5 to 100;
- E3: is hydrogen in case E2 is a residue according to formula (IIa) or E3 is a residue according to formula (Ilb);
- E5: is hydrogen in case E4 is a residue according to formula (IIa) or E5 is a residue according to formula (Ilb);
wherein 20 to 100% of the total amount of E2 and E4 is a residue according to formula (IIa) and 50 to 100% of the total amount of E1 is a residue according to formula (IIb).

The alkoxylated compounds according to the present invention may be used, for example, within cleaning compositions and/or fabric and home care products. They lead to an at least comparable and preferably even improved anti redeposition and cleaning performance within such compositions or products, for example in respect of redeposition of soils and removing of stains, compared to corresponding polymers or compounds according to the prior art. Beyond that, the alkoxylated compounds according to the present invention lead to an improved biodegradability when being employed within such compositions or products, for example within cleaning compositions and/or fabric and home care products.

Alkoxylated compounds with enhanced biodegradation according to the current invention can be used advantageously in washing and cleaning compositions, where they support the removal of hydrophobic soils from textile or hard surfaces by the surfactants and thus improve the washing and cleaning performances of the formulations. Moreover, they bring about better dispersion of the removed soil in the washing or cleaning liquor and prevent its redeposition onto the surfaces of the washed or cleaned materials.

For the purposes of the present invention, definitions such as C₁-C₂₂-alkyl, as defined above for, for example, the radical R² in formula (IIa), mean that this substituent (radical or residue) is an alkyl radical having from 1 to 22 carbon atoms. The alkyl radical can be either linear or branched or optionally cyclic. Alkyl radicals which have both a cyclic component and a linear component likewise come within this definition. The same applies to other alkyl radicals such as a C₁-C₄-alkyl radical. Examples of alkyl radicals are methyl, ethyl, n-propyl, sec-propyl, n-butyl, sec-butyl, isobutyl, 2-ethylhexyl, tert-butyl (tert-Bu/t-Bu), pentyl, hexyl, heptyl, cyclohexyl, octyl, nonyl, decyl or dodecyl.

The term "C₂-C₁₂-alkylene" as used herein refers to a saturated, divalent straight chain or branched hydrocarbon chains of 2, 3, 4, 5, 6 or up to 12 carbon atoms, examples including ethane-1,2-diyl ("ethylene"), propane-1,3-diyl, propane-1,2-diyl, 2-methylpropane-1,2-diyl, 2,2-dimethylpropane-1,3-diyl, butane-1,4-diyl, butane-1,3-diyl (= 1-methylpropane-1,3-diyl), butane-1,2-diyl ("1,2-butylene"), butane-2,3-diyl, 2-methylbutane-1,3-diyl, 3-methyl-butaen-1,3-diyl (= 1,1-dimethylpropane-1,3-diyl), pentane-1,4-diyl, pentane-1,5-diyl, pentane-2,5-diyl, 2-methylpentane-2,5-diyl (= 1,1-dimethylbutane-1,3-diyl) and hexane-1,6-diyl.

The term "C₅-C₁₀-cycloalkylene" as used herein refers to saturated, divalent hydrocarbons of 5, 6, 7, 8, 9 or 10 carbon atoms wherein all or at least a part of the respective number of carbon atoms form a cycle (ring). In case not all of the respective number of carbon atoms form a cycle, such remaining carbon atoms (i. e. those carbon atoms not forming a cycle) form a methane-1,1-diyl ("methylene") fragment or an ethane-1,2-diyl ("ethylene") fragment of the respective C₅-C₁₀-cycloalkylene radicals. One of the two valencies of said respective methylene or ethylene fragments is bound to a neighbouring nitrogen atom within general formula (I), whereas the second valency of said fragments is bound to the cyclic fragment of said C₅-C₁₀-cycloalkylene radical.

Expressed in other words, a C₅-C₁₀-cycloalkylene radical may comprise, in addition to its cyclic fragment, also some non-cyclic fragments building a bridge or a linker of the cyclic fragment of the C₅-C₁₀-cycloalkylene radical to the neighbouring nitrogen atom within general formula (I). The number of such carbon linker atoms is usually not more than 3, preferably 1 or 2. For example, a C₇-cycloalkylene radical may contain one C₆-cycle and one C₁-linker.

The respective hydrocarbon cycle itself may be unsubstituted or at least monosubstituted by C₁₋C₃-alkyl. It has to be noted that the carbon atoms of the respective C₁-C₃-alkyl substituents are not considered for determination of the number of carbon atoms of the C₅-C₁₀-cycloalkylene radical. In contrast to that, the number of carbon atoms of such a C₅-C₁₀-cycloalkylene radical is solely determined without any substituents, but only by the number of carbon atoms of the cyclic fragment and optionally present carbon linker atoms (methylene or ethylene fragments).

Examples for C₅-C₁₀-cycloalkylene include cyclopentane-1,2-diyl, cyclohexane-1,2-diyl, cyclohexane-1,3-diyl, cyclohexane-1,4-diyl, 3-(methane-1,1-diyl)-cyclohexane-1,3-diyl, cycloheptane-1,3-diyl or cyclooctane-1,4-diyl, each of the aforementioned radicals may be at least monosubstituted with C₁-C₃-alkyl.

It is preferred that the respective C₅-C₁₀-cycloalkylene radical is employed as a mixture of two or more individual cycloalkylene radicals having the same ring size. It is particularly preferred to employ a mixture of cyclohexane-1,3-diyl monosubstituted with methyl in position 2 or 4, respectively, of the cycle. The ratio of the two compounds is preferably in a range of 95 : 5 to 75 : 25, most preferably about 85 : 15 (4-methyl versus 2-methyl).

3-(methane-1,1-diyl)-cyclohexane-1,3-diyl is a preferred example for a C₅-C₁₀-cycloalkylene radical having a non-cyclic fragment in addition to its cyclic fragment. For this specific case, the non-cyclic fragment is a C₁-linker and the cyclic fragment is a C₆-cycle resulting in a C₇-cycloalkylene radical. 3-(methane-1,1-diyl)-cyclohexane-1,3-diyl may also be substituted with at least one C₁-C₃-alkyl, preferably with three methyl groups, in particular 3,5,5-trimethyl. The latter one is a fragment of isophorone diamine, which may be employed as backbone with general formula (I).

For the purposes of the present invention, the term "aralkyl", as defined above for, for example, the radical R² in formula (IIa), means that the substituent (radical) is an aromatic ("ar") combined with an alkyl substituent ("alkyl"). The aromatic "ar" part can be a monocyclic, bicyclic or optionally polycyclic aromatic. In the case of polycyclic aromatics, individual rings can optionally be fully or partially saturated. Preferred examples of aryl are phenyl, naphthyl or anthracyl, in particular phenyl.

Within the context of the present invention, the term "polyalkylene imine" differs from the corresponding term "polyamine" especially in respect of the branching of the corresponding backbone. Whereas polyamines in the context of the present invention are (predominantly) linear compounds in respect of its backbone (without consideration of any alkoxylation), containing primary and/or secondary amino moieties but no tertiary amino moieties within its backbone, the corresponding polyalkylene imines are, according to the present invention, (predominantly) branched molecules containing in respect of its backbone (without consideration of any alkoxylation), in addition to the primary and/or secondary amino moieties, mandatorily tertiary amino moieties, which cause the branching of the (linear) main chain into several side chains within the polymeric backbone (basic skeleton). Polyalkylene imines, both as backbone and as alkoxylated compounds, are those compounds falling under the definition of general formula (I), wherein z is an integer of at least 1. In contrast to that, polyamines, both as backbone and as alkoxylated compounds, are those compounds of formula (I), wherein z is 0.

By consequence, the inventive alkoxylated polyalkylene imines have a basic skeleton (backbone), which comprises primary, secondary and tertiary amine nitrogen atoms which are joined by alkylene radicals R (as defined below) and are in the form of the following moieties in random arrangement:
- primary amino moieties which terminate the main chain and the side chains of the basic skeleton and whose hydrogen atoms are subsequently replaced by alkylenoxy units: 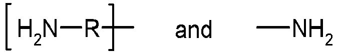
- secondary amino moieties whose hydrogen atom is subsequently replaced by alkylenoxy units: 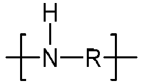
- tertiary amino moieties which branch the main chain and the side chains:

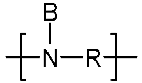

For the sake of completeness, it is indicated that the variable B indicating the branching of the polyalkylene imine backbone of compounds according to general formula (I) may contain fragments, such as -[-NH-R]_{y}-, H₂N-R or combinations thereof, including a two times, three times or even higher degree of branching. Said tertiary amino moieties are not present in the backbone of polyamine compounds.

In order to obtain the respective alkoxylated compounds, the hydrogen atoms of the primary and/or secondary amino groups of the basic polyalkylene imine or polyamine skeleton are replaced by alkylenoxy units of the formula (IIa) or (IIb) as defined below. In case E2 or E4 is defined according to general formula (IIa), the respective corresponding hydrogen atom of the primary amino function of the backbone (E3 or E5) stays unamended due to the formulation of an amido group.

Within the context of the present invention, the term "polyalkylene imine backbone" relates to those fragments of the inventive alkoxylated polyalkylene imines which are not alkoxylated. The polyalkylene imine backbone is employed within the present invention as an educt to be reacted first with at least one lactone or hydroxy carbon acid and then alkoxylated with at least one epoxide in order to obtain the inventive alkoxylated polyalkylene imines ("alkoxylated compounds"). Polyalkylene imines as such (backbones or not alkoxylated compounds) are known to a person skilled in the art. For example, the polyalkylene imine backbone can be derived from the compounds according to general formula (I) by replacing the variable E1 to E5 with hydrogen atoms (H).

Within the context of the present invention, the term "polyamine backbone" relates to those fragments of the inventive alkoxylated polyamines which are not alkoxylated. The polyamine backbone is employed within the present invention as an educt to be reacted first with at least one lactone or hydroxy carbon acid and then alkoxylated with at least one epoxide in order to obtain the inventive alkoxylated polyamines ("alkoxylated compounds"). Polyamines as such (backbones or not alkoxylated compounds) are known to a person skilled in the art. For example, the polyamine backbone can be derived from the compounds according to general formula (I) by replacing the variable E1 to E5 with hydrogen atoms (H).

Within the context of the present invention, the term "NH-functionality" is defined as follows: In case of (predominantly) linear amines, such as di- and oligo amines like N4 amine or hexamethylene diamine, the structure itself gives information about the content of primary, secondary and tertiary amines. A primary amino group (-NH2) has two NH-functionalities, a secondary amino group only one NH functionality, and a tertiary amino group, by consequence, has no reactive NH functionality. In case of (predominantly) branched polyethylene imines, such as those as obtained from polymerization of the monomer ethylene imine (C2H5N), the respective polymer (polyethylene imine) contains a mixture of primary, secondary and tertiary amino groups. The exact distribution of primary, secondary and tertiary amino groups can be determined as described in Lukovkin G.M., Pshezhetsky V.S., Murtazaeva G. A.: Europ. Polymer Journal 1973, 9, 559-565 and St. Pierre T., Geckle M.: ACS Polym. Prep. 1981, 22, 128-129. In case of the modification with lactone or hydroxyacids and alkylene oxides it is assumed, that polyethylene imine consist of a 1 : 1 : 1 mixture of primary, secondary and tertiary amino groups, and therefore, an amount resembling the molar mass of the monomer employed, such as ethylene imine, contributes in average with one (reactive) NH-functionality. This is the molecular weight of the repeating unit.

The invention is specified in more detail as follows:
The invention relates to an alkoxylated polyalkylene imine or alkoxylated polyamine of the general formula (I) 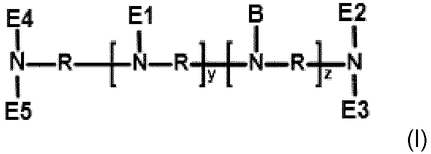 in which the variables are each defined as follows:
- R: represents identical or different, i) linear or branched C₂-C₁₂₋alkylene radicals or ii) an etheralkyl unit of the following formula (III): 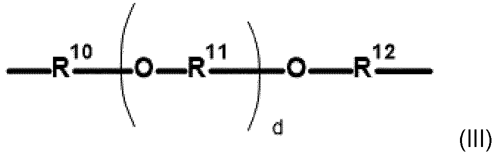 in which the variables are each defined as follows:
R¹⁰, R¹¹, R¹² represent identical or different, linear or branched C₂-C₆-alkylene radicals and
d is an integer having a value in the range of 0 to 50 or
iii) C₅-C₁₀-cycloalkylene radicals optionally substituted with at least one C₁-C₃-alkyl;
- B: represents a continuation of the alkoxylated polyalkylene imine by branching;
- y and z: are each an integer having a value in the range of 0 to 150, under the provisio that both z and y are 0 in case R are C₅-C₁₀-cycloalkylene radicals optionally substituted with at least one C₁-C₃-alkyl;
- E1, E2 and E4: represent an identical or different residue according to formula (IIa) or an identical or different residue according to formula (IIb), wherein the residue according to formula (IIa) is an alkylenoxy unit defined as follows 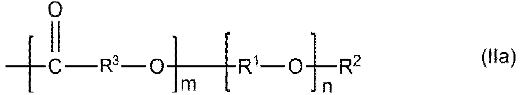 in which the variables are each defined as follows:
R¹ represents C₂-C₂₂-(1,2-alkylene) radicals;
R² represents hydrogen or C1-C4-alkyl or C₇-C₂₂-aralkyl in case z is an integer ≥ 1 within general formula (I), or
R² represents hydrogen or C₁-C₄-alkyl or and/or C₇-C₂₂-aralkyl in case z is 0 within general formula (I);
R³ represents linear or branched C₁-C₂₂-alkylene radicals;
m is an integer having a value of at least 1 to 10;
n is an integer having a value of at least 5 to 100; and wherein the residue according to formula (IIb) is an alkylenoxy unit defined as follows 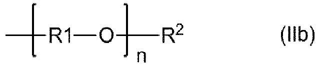 in which the variables are defined as follows:
R¹ represents C₂-C₂₂-(1,2-alkylene) radicals;
R² represents hydrogen or C1-C4-alkyl or C₇-C₂₂-aralkyl;
n is an integer having a value of at least 5 to 100;
- E3: is hydrogen in case E2 is a residue according to formula (IIa) or E3 is a residue according to formula (Ilb);
- E5: is hydrogen in case E4 is a residue according to formula (IIa) or E5 is a residue according to formula (Ilb);
wherein 20 to 100% of the total amount of E2 and E4 is a residue according to formula (IIa) and 50 to 100% of the total amount of E1 is a residue according to formula (IIb).

For the sake of completeness, it is indicated that the variable B indicating the branching of the alkoxylated polyalkylene imine compounds according to general formula (I) may contain fragments, such as -[-NE-R]_{y}-, E₂N-R or combinations thereof, including a two times, three times or even higher degree of branching. Said tertiary amino moieties caused by the branching of the backbone are not present within alkoxylated polyamine compounds according to general formula (I) since the variable z is 0 for those kind of compounds within formula (I).

Within the compounds according to general formula (I), it is preferred that R represents identical or different,
i) linear or branched C₂-C₁₂₋alkylene radicals, preferably R is ethylene, propylene or hexamethylene, or
ii) C₅-C₁₀-cycloalkylene radicals optionally substituted with at least one C₁-C₃-alkyl, preferably R is at least one C₆-C₇-cycloalkylene radical substituted with at least one methyl or ethyl.

It is even more preferred for the alkoxylated compounds of the present invention that within formulas (IIa) and/or (IIb) the variables are each defined as follows:
- R¹: represents 1,2-ethylene, 1,2-propylene or 1,2-butylene, most preferably 1,2-ethylene; and/or
- R²: represents hydrogen or C₁-C₄-alkyl, preferably hydrogen, methyl and/or ethyl, most preferably hydrogen; and/or
- R³: represents linear or branched C₂-C₁₀-alkylene radicals, preferably linear or branched C₂-C₅-alkylene radicals; and/or
- m: is an integer having a value in the range of 1 to 5, preferably of 1 to 3; and/or
- n: is an integer having a value in the range of 8 to 40, preferably of 10 to 25; and/or

50 to 100%, preferably 80 to 100%, even more preferably 90 to 100%, most preferably more than 99% of the total amount of E2 and E4 is a residue according to formula (IIa) and 80 to 100%, most preferably 85 to 95% of the total amount of E1 is a residue according to formula (IIb).

It is also preferred for the alkoxylated compounds according to general formula (I) of the present invention that the weight average molecular weight (Mw) of the polyalkylene imine backbone or of the polyamine backbone lies in the range of 50 to 10 000 g/mol, preferably in the range of 500 to 5000 g/mol, more preferably in the range of 600 to 2 000 g/mol.

The person skilled in the art knows how to determine/measure the respective weight average molecular weight (M_{W}). This can be done, for example, by size exclusion chromatography (such as GPC). Preferably, M_{W} values are determined by the method as follows: OECD TG 118 (1996), which means in detail

OECD (1996), Test No. 118: Determination of the Number-Average Molecular Weight and the Molecular Weight Distribution of Polymers using Gel Permeation Chromatography, OECD Guidelines for the Testing of Chemicals, Section 1, OECD Publishing, Paris, also available on the internet, for example, under https://doi.org/10.1787/9789264069848-en.

Alkoxylated polyalkylene imine compounds according to formula (I) are preferably compounds wherein the variables are each defined as follows:
- R: is ethylene or propylene, preferably ethylene;
- the sum of y+z: is an integer having a value in the range of 9 to 120, preferably in the range of 10 to 20.

It is even more preferred for alkoxylated polyalkylene imine compounds according to general formula (I) that the variables are defined as follows:
- R: is ethylene or propylene, preferably ethylene;
- the sum of y+z: is an integer having a value in the range of 9 to 120, preferably in the range of 10 to 20;
- R¹: represents 1,2-ethylene;
- R²: represents hydrogen or C₁-C₄-alkyl, preferably hydrogen, methyl and/or ethyl, most preferably hydrogen;
- R³: represents linear or branched C₂-C₁₀-alkylene radicals, preferably linear or branched C₂-C₅-alkylene radicals;
- m: is an integer having a value in the range of 1 to 5, preferably of 1 to 3;
- n: is an integer having a value in the range of 8 to 40, preferably of 10 to 25;

50 to 100%, preferably 80 to 100%, even more preferably 90 to 100%, most preferably more than 99 of the total amount of E2 and E4 is a residue according to formula (Ila) and 80 to 100%, most preferably 85 to 95% of the total amount of E1 is a residue according to formula (IIb).

In a preferred embodiment of the present invention, the alkoxylated polyalkylene imine compounds according to general formula (I) are those compounds wherein the variables are each defined as follows:
- R: is ethylene;
- the sum of y+z: is an integer having a value in the range of 10 to 20;
- R¹: represents 1,2-ethylene;
- R²: represents hydrogen;
- R³: represents linear or branched C₂-C₅-alkylene radicals;
- m: is an integer having a value in the range of 1 to 3;
- n: is an integer having a value in the range of 10 to 25;
wherein 90 to 100%, most preferably more than 99%, of the total amount of E2 and E4 is a residue according to formula (Ila) and 85 to 95% of the total amount of E1 is a residue according to formula (IIb).

In another embodiment of the present invention the alkoxylated compounds falling under the definition of general formula (I) are alkoxylated polyamines. For those kind of compounds the variable z is 0.

The inventive alkoxylated polyamines are preferably, but not limited to, alkoxylated hexamethylenediamine, alkoxylated ethylenediamine, alkoxylated 1,3-diaminopropane, alkoxylated neopentanediamine, alkoxylated diethylentriamine, alkoxylated octamethylenediamine or alkoxylated 1,2-propylenediamine.

The R radicals connecting the amine nitrogen atoms may be identical or different, linear or branched C₂-C₁₂-alkylene radicals, preferably C₂-C₆-alkylene radicals. A preferred branched alkylene is 1,2-propylene. A particularly preferred alkylene radical R is ethylene or hexamethylene. However, it is also preferred that the radical R is an ether alkyl unit according to formula (III) as defined above or C₅-C₁₀-cycloalkylene radicals as defined above.

In case the alkoxylated compounds according to general formula (I) are alkoxylated polyamines, it is preferred that the variables are defined as follows:
- y: is an integer having a value in the range of 0 to 10;
- z: is 0;
- R: represents identical or different, linear or branched C₂-C₁₂₋alkylene radicals or an etheralkyl unit according to formula (III), wherein
d is from 1 to 5, and
R¹⁰, R¹¹, R¹² are independently selected from linear or branched C₃ to C₄ alkylene radicals.

It is even more preferred for those kinds of alkoxylated polyamine compounds according to formula (I) that
- R¹: represents 1,2-ethylene;
- R²: represents hydrogen or C₁-C₄-alkyl, preferably hydrogen, methyl and/or ethyl, most preferably hydrogen;
- R³: represents linear or branched C₂-C₁₀-alkylene radicals, preferably linear or branched C₂-C₅-alkylene radicals;
- m: is an integer having a value in the range of 1 to 5, preferably of 1 to 3;
- n: is an integer having a value in the range of 8 to 40, preferably of 10 to 25;
- y: is an integer having a value in the range of 1 to 10;
wherein 50 to 100%, preferably 80 to 100%, even more preferably 90 to 100%, most preferably more than 99%, of the total amount of E2 and E4 is a residue according to formula (IIa) and 80 to 100%, most preferably 90 to 100% of the total amount of E1 is a residue according to formula (IIb).

In a preferred embodiment for alkoxylated polyamine compounds according to formula (I), the variables are defined as follows:
- R: is ethylene or propylene;
- R¹: represents 1,2-ethylene;
- R²: represents hydrogen;
- R³: represents linear or branched C₂-C₅-alkylene radicals;
- m: is an integer having a value in the range of 1 to 3;
- n: is an integer having a value in the range of 10 to 25;
- y: is an integer having a value in the range of 2 to 4;
wherein 90 to 100%, most preferably more than 99%, of the total amount of E2 and E4 is a residue according to formula (IIa) and 90 to 100% of the total amount of E1 is a residue according to formula (IIb).

In another embodiment of the present invention, wherein the compounds according to general formula (I) are alkoxylated polyamines, the variable R is based on C₅-C₈-cycloalkylene radicals. Said C₅-C₈-cycloalkylene radicals may be unsubstituted or at least monosubstituted by C₁-C₃-alkyl. Within this embodiment, it is preferred that the variables of general formula (I) are defined as follows:
- y: is 0;
- z: is 0;
- R: represents identical or different C₅-C₁₀-cycloalkylene radicals optionally substituted with at least one C₁-C₃-alkyl, preferably R is at least one C₆-C₇-cycloalkylene radical substituted with at least one methyl or ethyl, more preferably R is at least one C₆-cycloalkylene radical mono-substituted with methyl or at least one C₇-cycloalkylene radical substituted with at least one methyl, preferably trisubstituted with methyl, most preferably R is a mixture of 4-methyl-cyclohexane-1,3-diyl and 2-methyl-cyclohexane-1,3-diyl.

It is even more preferred for those kinds of alkoxylated polyamine compounds according to formula (I) that
- R¹: represents 1,2-ethylene;
- R²: represents hydrogen or C₁-C₄-alkyl, preferably hydrogen, methyl and/or ethyl, most preferably hydrogen;
- R³: represents linear or branched C₂-C₁₀-alkylene radicals, preferably linear or branched C₂-C₅-alkylene radicals;
- m: is an integer having a value in the range of 1 to 5, preferably of 1 to 3;
- n: is an integer having a value in the range of 8 to 40, preferably of 10 to 25;
- y: is 0;
wherein 50 to 100%, preferably 80 to 100%, even more preferably 90 to 100%, most preferably more than 99%, of the total amount of E2 and E4 is a residue according to formula (Ila) and 80 to 100%, most preferably 90 to 100% of the total amount of E1 is a residue according to formula (IIb).

In a preferred embodiment for alkoxylated polyamine compounds according to formula (I), the variables are defined as follows:
- R: is ethylene or propylene;
- R¹: represents 1,2-ethylene;
- R²: represents hydrogen;
- R³: represents linear or branched C₂-C₅-alkylene radicals;
- m: is an integer having a value in the range of 1 to 3;
- n: is an integer having a value in the range of 10 to 25;
- y: is 0;
wherein 90 to 100%, most preferably more than 99%, of the total amount of E2 and E4 is a residue according to formula (IIa) and 90 to 100% of the total amount of E1 is a residue according to formula (IIb).

In another embodiment of the present invention, the inventive alkoxylated polyalkylene imine or alkoxylated polyamine contains 1 to 30% of residues according to formula (IV), preferably 3 to 20%, most preferably 5 to 10% in relation to the total amount of residues according to formula (Ila) and formula (IIb).

The inventive alkoxylated polyalkylene imines or alkoxylated polyamines may also be quaternized. A suitable degree of quaternization is up to 100%, in particular from 10 to 95%. The quaternization is effected preferably by introducing C₁-C₂₂-alkyl groups, C₁-C₄-alkyl groups and/or C₇-C₂₂-aralkyl groups and may be undertaken in a customary manner by reaction with corresponding alkyl halides and dialkyl sulfates.

The quaternization may be advantageous in order to adjust the alkoxylated polyalkylene imines or the alkoxylated polyamines to the particular composition such as cosmetic compositions in which they are to be used, and to achieve better compatibility and/or phase stability of the formulation.

The quaternization of alkoxylated polyalkylene imines or alkoxylated polyamines is achieved preferably by introducing C₁-C₂₂ alkyl, C₁-C₄-alkyl groups and/or C₇-C₂₂ aralkyl, aryl or alkylaryl groups and may be undertaken in a customary manner by reaction with corresponding alkyl-, aralkyl - halides and dialkylsulfates, as described for example in WO 09/060059.

Quaternization can be accomplished, for example, by reacting an alkoxylated polyamine or alkoxylated polyalkylene imine with an alkylation agent such as a C₁-C₄-alkyl halide, for example with methyl bromide, methyl chloride, ethyl chloride, methyl iodide, n-butyl bromide, isopropyl bromide, or with an aralkyl halide, for example with benzyl chloride, benzyl bromide or with a di-C₁-C₂₂-alkyl sulfate in the presence of a base, especially with dimethyl sulfate or with diethyl sulfate. Suitable bases are, for example, sodium hydroxide and potassium hydroxide.

The amount of alkylating agent determines the amount of quaternization of the amino groups in the polymer, i.e. the amount of quaternized moieties.

The amount of the quaternized moieties can be calculated from the difference of the amine number in the non-quaternized amine and the quaternized amine.

The amine number can be determined according to the method described in DIN 16945.

The quaternization can be carried out without any solvent. However, a solvent or diluent like water, acetonitrile, dimethylsulfoxide, N-methylpyrrolidone, etc. may be used. The reaction temperature is usually in the range from 10°C to 150°C and is preferably from 50°C to 100°C.

Another subject of the present invention is a process for preparing the alkoxylated polyalkylene imines or the alkoxylated polyamines as described above. Within this process, a polyalkylene imine backbone or a polyamine backbone is first reacted with at least one lactone and/or at least one hydroxy carbon acid and then with at least one C₂-C₂₂-epoxide in order to obtain the respective alkoxylated compounds.

It has to be noted that the alkoxylation process as such, wherein a backbone of polyalkylene imines or polyamines is reacted with alkylene oxides, such as ethylene oxide or propylene oxide, is known to a person skilled in the art. The same methods can be applied for the present invention, wherein the respective backbones are first reacted with lactones or hydroxyl carbon acids, and the alkylation process is carried out afterwards. The reaction of the first step between the respective backbone and the lactones etc. is known to the skilled person.

It is preferred within said process that per mol of N-H functionalities in the polyalkylene imine or polyamine, the respective polyalkylene imine backbone or polyamine backbone is reacted with at least 0.05 moles, preferably at least 0.2 moles, of at least one lactone and/or at least one hydroxy carbon acid and then with at least 5 moles of least one C₂-C₂₂-epoxide.

It has to be noted within the context of the method according to the present invention that those primary amino moieties of the respective backbone, which are reacted within the first reaction step with at least one lactone and/or at least one hydroxy carbon acid are transferred into an amido moiety wherein one of the originally two hydrogen atoms of the respective primary amino moiety is replaced by a fragment originating from the respective lactone or hydroxyl carbon acid, whereas the second hydrogen atom of the primary amino moiety of the backbone does not get substituted by this reaction. Beyond that, such a second hydrogen atom of the primary amino moiety of the backbone does also not become substituted within the second reaction step according to the present invention when the respective intermediate backbone is alkoxylated with at least one C₂-C₂₂-epoxide. In addition, each fragment of the intermediate backbone obtained in the first reaction step, which originates from the at least one lactone and/or at least one hydroxyl carbon acid, is reacted with at least one C₂-C₂₂-epoxide within the second reaction step of the method according to the present invention. The conversion rate of the respective step can be determined according to methods known to the skilled person, such as NMR-spectroscopy. For example, both the first reaction step and the second reaction step may be monitored by ¹³C-NMR-spectroscopy and/or ¹H-NMR-spectroscopy, as shown below within the experimental section in more detail.

In connection with the first step of the method according to the present invention for preparing an alkoxylated polyalkylene imine or an alkoxylated polyamine according to general formula (I) as defined above, the respective polyalkylene imine backbone or polyamine backbone is first reacted with at least one lactone and/or at least one hydroxy-carbon acid. This first reaction step as such is known to a person skilled in the art.

However, it is preferred within this first reaction step that the reaction temperature is in a range between 50 to 200°C, more preferred between 70 to 180°C, most preferred in a range between 100 to 160°C.

This first reaction step may be carried out in the presence of at least one solvent and/or at least one catalyst. However, it is preferred within the first reaction step that the respective step is carried out without any solvent and/or without any catalyst. Suitable solvents are preferably selected from xylene, toluene, tetrahydrofuran (THF), methyl-tert. butyl ether or diethyl ether. Preferred catalysts are selected from alkali metal hydroxides or alkali metal alkoxides, such as KOMe, NaOMe or other catalysts suitable for ring-opening polymerization by lactones like tin (II) octoate.

As described above, the second step of the method according to the present invention as such (alkoxylation) is known to a person skilled in the art. The alkoxylation as such (second reaction step of the method according to the present invention) may be carried out as a one-step reaction or the alkoxylation as such may be split into two or more individual steps.

It is preferred within the present invention that the second step (alkoxylation) is carried out as a single step reaction.

Within this preferred embodiment, the alkoxylation is carried out in the presence of at least one catalyst and/or in the absence of water. Within this single step reaction of the alkoxylation step, the catalyst is preferably a basic catalyst. Examples of suitable catalysts are alkali metal and alkaline earth metal hydroxides such as sodium hydroxide, potassium hydroxide and calcium hydroxide, alkali metal alkoxides, in particular sodium and potassium C₁-C₄-alkoxides, such as sodium methoxide, sodium ethoxide and potassium tert-butoxide, alkali metal and alkaline earth metal hydrides such as sodium hydride and calcium hydride, and alkali metal carbonates such as sodium carbonate and potassium carbonate. Preference is given to the alkali metal hydroxides and the alkali metal alkoxides, particular preference being given to potassium hydroxide and sodium hydroxide. Typical use amounts for the base are from 0.05 to 10% by weight, in particular from 0.5 to 2% by weight, based on the total amount of polyalkylene imine or polyamine and alkylene oxide.

One alternative procedure in connection with the second reaction step (alkoxylation) is a two-step reaction by initially undertaking only an incipient alkoxylation of the modified backbone of the polyalkylene imine or the polyamine obtained during the first step. In this first part of the second step, the modified backbone of the polyalkylene imine or of the polyamine is reacted only with a portion of the total amount of ethylene oxide used, which corresponds to about 1 mole of ethylene oxide per mole of NH moiety or NH functionality, respectively. This reaction (of the first part of the second step) is undertaken generally in the absence of a catalyst in aqueous solution at from 70 to 200°C, preferably from 80 to 160°C, under a pressure of up to 10 bar, in particular up to 8 bar.

Said second part of the alkoxylation reaction (second step of the alternative method according to the present invention) is undertaken typically in the presence of the same type of catalyst as described above for the single step alkoxylation reaction.

The second step of alkoxylation may be undertaken in substance (variant a)) or in an organic solvent (variant b)). The process conditions specified below may be used for both steps of the alkoxylation reaction.

In variant a), the aqueous solution of the incipiently alkoxylated polyalkylene imine or polyamine obtained in the first step, after addition of the catalyst, is initially dewatered. This can be done in a simple manner by heating to from 80 to 150°C and distilling off the water under a reduced pressure of from less than 30 mbar. The subsequent reactions with the alkylene oxides are effected typically at from 70 to 200°C, preferably from 100 to 180°C, and at a pressure of up to 10 bar, in particular up to 8 bar, and a continued stirring time of from about 0.5 to 4h at from about 100 to 160°C and constant pressure follows in each case.

Suitable reaction media for variant b) are in particular nonpolar and polar aprotic organic solvents. Examples of particularly suitable nonpolar aprotic solvents include aliphatic and aromatic hydrocarbons such as hexane, cyclohexane, toluene and xylene. Examples of particularly suitable polar aprotic solvents are ethers, in particular cyclic ethers such as tetrahydrofuran and dioxane, N,N-dialkylamides such as dimethylformamide and dimethylacetamide, and N-alkyllactams such as N-methylpyrrolidone. It is of course also possible to use mixtures of these aprotic solvents. Preferred solvents are xylene and toluene.

In variant b) too, the solution obtained in the first step, after addition of catalyst and solvent, is initially dewatered, which is advantageously done by separating out the water at a temperature of from 120 to 180°C, preferably supported by a gentle nitrogen stream. The subsequent reaction with the alkylene oxide may be effected as in variant a).

In variant a), the alkoxylated polyalkylene imine or polyamine is obtained directly in substance and may be converted if desired to an aqueous solution. In variant b), the organic solvent is typically removed and replaced by water. The products may of course also be isolated in substance.

The amount of residues according to formula (IIa) or formula (IIb) in connection with the definition for the substituents E1 to E5 can be controlled by several factors, such as the stoichiometry of the educts employed, the reaction temperature within the individual steps, the amount and/or type of the catalysts employed and/or the selected solvent.

In another preferred embodiment, the lactone is caprolactone, the hydroxy carbon acid is lactic acid and/or the C₂-C₂₂-epoxide is ethylene oxide.

In another preferred embodiment, the alkoxylated polyalkylene imine or alkoxylated polyamine is additionally quaternized as described above. However, it is also possible to sulfatize the alkoxylated compounds instead of or in addition to the quaternization.

Another subject matter of the present invention is the use of the above-mentioned alkoxylated polyalkylene imines or alkoxylated polyamines, in laundry detergents, in fabric and home care products, in cosmetic formulations, as crude oil emulsion breaker, in pigment dispersions for ink jet inks, in formulations for electro plating, in cementitious compositions and/or as dispersant for agrochemical formulations, preferably in cleaning compositions and/or in fabric and home care products.

The inventive alkoxylated polyalkylene imines or alkoxylated polyamines can be added to cosmetic formulations, as crude oil emulsion breaker, in pigment dispersions for ink jet inks, formulations for electro plating, in cementitious compositions. However, the inventive compounds can also be added to (used in) washing or cleaning compositions.

Another subject-matter of the present invention is, therefore, a laundry detergent, a cleaning composition, fabric and home care product, cosmetic formulation, crude oil emulsion breaker, pigment dispersion for ink jet inks, formulation for electro plating, cementitious composition and/or dispersant for agrochemical formulations, comprising at least one alkoxylated polyalkylene imine or alkoxylated polyamine, as defined above.

Preferably, it is a laundry detergent, a cleaning composition and/or fabric and home care product, comprising at least one alkoxylated polyalkylene imine or alkoxylated polyamine, as defined above.

The inventive alkoxylated polyalkylene imines or alkoxylated polyamines are present in said formulations at a concentration of 0.1 to 5 weight%, preferably at a concentration of 0.5 to 2 weight%.

The inventive alkoxylated polyalkylene imines or alkoxylated polyamines can also be added to a cleaning composition comprising from about 1% to about 70% by weight of a surfactant system. The inventive alkoxylated polyalkylene imines or alkoxylated polyamines may be present in a cleaning composition at a concentration of from about 0.1% to about 5% by weight of the composition, or at a concentration of from about 0.5% to about 2% by weight of the composition.

### Cleaning Composition

As used herein the phrase "cleaning composition" includes compositions and formulations designed for cleaning soiled material. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, dish washing compositions, hard surface cleaning compositions, unit dose formulation, delayed delivery formulation, detergent contained on or in a porous substrate or nonwoven sheet, and other suitable forms that may be apparent to one skilled in the art in view of the teachings herein. Such compositions may be used as a pre-laundering treatment, a post-laundering treatment, or may be added during the rinse or wash cycle of the laundering operation. The cleaning compositions may have a form selected from liquid, powder, single-phase or multi-phase unit dose, pouch, tablet, gel, paste, bar, or flake.

The cleaning compositions comprise a surfactant system in an amount sufficient to provide desired cleaning properties. In some embodiments, the cleaning composition comprises, by weight of the composition, from about 1% to about 70% of a surfactant system. In other embodiments, the liquid cleaning composition comprises, by weight of the composition, from about 2% to about 60% of the surfactant system. In further embodiments, the cleaning composition comprises, by weight of the composition, from about 5% to about 30% of the surfactant system. The surfactant system may comprise a detersive surfactant selected from anionic surfactants, nonionic surfactants, cationic surfactants, zwitterionic surfactants, amphoteric surfactants, ampholytic surfactants, and mixtures thereof. Those of ordinary skill in the art will understand that a detersive surfactant encompasses any surfactant or mixture of surfactants that provide cleaning, stain removing, or laundering benefit to soiled material.

The cleaning compositions may also contain adjunct cleaning additives. Suitable adjunct cleaning additives include builders, structurants or thickeners, clay soil removal/antiredeposition agents, polymeric soil release agents, polymeric dispersing agents, polymeric grease cleaning agents, enzymes, enzyme stabilizing systems, bleaching compounds, bleaching agents, bleach activators, bleach catalysts, brighteners, dyes, hueing agents, dye transfer inhibiting agents, chelating agents, suds supressors, softeners, and perfumes.

The compounds of the present invention may be utilized in laundry detergents or cleaning compositions comprising a surfactant system comprising C₁₀-C₁₅ alkyl benzene sulfonates (LAS) and one or more co-surfactants selected from nonionic, cationic, anionic or mixtures thereof. The selection of co-surfactant may be dependent upon the desired benefit. In one embodiment, the co-surfactant is selected as a nonionic surfactant, preferably C₁₂-C₁₈ alkyl ethoxylates. In another embodiment, the co-surfactant is selected as an anionic surfactant, preferably C₁₀-C₁₈ alkyl alkoxy sulfates (AEₓS) wherein x is from 1 to 30. In another embodiment the co-surfactant is selected as a cationic surfactant, preferably dimethyl hydroxyethyl lauryl ammonium chloride. If the surfactant system comprises C₁₀-C₁₅ alkyl benzene sulfonates (LAS), the LAS is preferably used at levels ranging from about 9% to about 25%, or from about 13% to about 25%, or from about 15% to about 23% by weight of the composition.

The surfactant system may comprise from 0% to about 15%, or from about 0.1 % to about 7%, or from about 1% to about 4% by weight of the composition of one or more of co-surfactants selected from a nonionic co-surfactant, cationic co-surfactant, anionic co-surfactant and any mixture thereof.

Non-limiting examples of nonionic co-surfactants include: C₁₂-C₁₈ alkyl ethoxylates, such as, NEODOL^{®} nonionic surfactants from Shell; C₆-C₁₂ alkyl phenol alkoxylates wherein the alkoxylate units are a mixture of ethyleneoxy and propyleneoxy units; C₁₂-C₁₈ alcohol and C₆-C₁₂ alkyl phenol condensates with ethylene oxide/propylene oxide block alkyl polyamine ethoxylates such as PLURONIC^{®} from BASF; C₁₄-C₂₂ mid-chain branched alcohols, BA, as discussed in US 6,150,322; C₁₄-C₂₂ mid-chain branched alkyl alkoxylates, BAEₓ, wherein x is from 1 to 30, as discussed in US 6,153,577, US 6,020,303 and US 6,093,856; alkylpolysaccharides as discussed in U.S. 4,565,647 Llenado, issued January 26, 1986; specifically alkylpolyglycosides as discussed in US 4,483,780 and US 4,483,779; polyhydroxy fatty acid amides as discussed in US 5,332,528; and ether capped poly(oxyalkylated) alcohol surfactants as discussed in US 6,482,994 and WO 01/42408.

Non-limiting examples of semi-polar nonionic co-surfactants include: water-soluble amine oxides containing one alkyl moiety of from about 10 to about 18 carbon atoms and 2 moieties selected from the group consisting of alkyl moieties and hydroxyalkyl moieties containing from about 1 to about 3 carbon atoms; water-soluble phosphine oxides containing one alkyl moiety of from about 10 to about 18 carbon atoms and 2 moieties selected from the group consisting of alkyl moieties and hydroxyalkyl moieties containing from about 1 to about 3 carbon atoms; and water-soluble sulfoxides containing one alkyl moiety of from about 10 to about 18 carbon atoms and a moiety selected from the group consisting of alkyl moieties and hydroxyalkyl moieties of from about 1 to about 3 carbon atoms. See WO 01/32816, US 4,681,704, and US 4,133,779.

Non-limiting examples of cationic co-surfactants include: the quaternary ammonium surfactants, which can have up to 26 carbon atoms include: alkoxylate quaternary ammonium (AQA) surfactants as discussed in US 6,136,769; dimethyl hydroxyethyl quaternary ammonium as discussed in US 6,004,922; dimethyl hydroxyethyl lauryl ammonium chloride; polyamine cationic surfactants as discussed in WO 98/35002, WO 98/35003, WO 98/35004, WO 98/35005, and WO 98/35006; cationic ester surfactants as discussed in US patents Nos. 4,228,042, 4,239,660 4,260,529 and US 6,022,844; and amino surfactants as discussed in US 6,221,825 and WO 00/47708, specifically amido propyldimethyl amine (APA).

Nonlimiting examples of anionic co-surfactants useful herein include: C₁₀-C₂₀ primary, branched chain and random alkyl sulfates (AS); C₁₀-C₁₈ secondary (2,3) alkyl sulfates; C₁₀-C₁₈ alkyl alkoxy sulfates (AEₓS) wherein x is from 1 to 30; C₁₀-C₁₈ alkyl alkoxy carboxylates comprising 1 to 5 ethoxy units; mid-chain branched alkyl sulfates as discussed in US 6,020,303 and US 6,060,443; mid-chain branched alkyl alkoxy sulfates as discussed in US 6,008,181 and US 6,020,303; modified alkylbenzene sulfonate (MLAS) as discussed in WO 99/05243, WO 99/05242 and WO 99/05244; methyl ester sulfonate (MES); and alpha-olefin sulfonate (AOS).

The present invention may also relate to compositions comprising the inventive compounds and a surfactant system comprising C₈-C₁₈ linear alkyl sulphonate surfactant and a co-surfactant. The compositions can be in any form, namely, in the form of a liquid; a solid such as a powder, granules, agglomerate, paste, tablet, pouches, bar, gel; an emulsion; types delivered in dual-compartment containers; a spray or foam detergent; premoistened wipes (i.e., the cleaning composition in combination with a nonwoven material such as that discussed in US 6,121,165, Mackey, et al.); dry wipes (i.e., the cleaning composition in combination with a nonwoven materials, such as that discussed in US 5,980,931, Fowler, et al.) activated with water by a consumer; and other homogeneous or multiphase consumer cleaning product forms.

In one embodiment, the cleaning composition of the present invention is a liquid or solid laundry detergent composition. In another embodiment, the cleaning composition of the present invention is a hard surface cleaning composition, preferably wherein the hard surface cleaning composition impregnates a nonwoven substrate. As used herein "impregnate" means that the hard surface cleaning composition is placed in contact with a nonwoven substrate such that at least a portion of the nonwoven substrate is penetrated by the hard surface cleaning composition, preferably the hard surface cleaning composition saturates the nonwoven substrate. The cleaning composition may also be utilized in car care compositions, for cleaning various surfaces such as hard wood, tile, ceramic, plastic, leather, metal, glass. This cleaning composition could be also designed to be used in a personal care and pet care compositions such as shampoo composition, body wash, liquid or solid soap and other cleaning composition in which surfactant comes into contact with free hardness and in all compositions that require hardness tolerant surfactant system, such as oil drilling compositions.

In another embodiment the cleaning composition is a dish cleaning composition, such as liquid hand dishwashing compositions, solid automatic dishwashing compositions, liquid automatic dishwashing compositions, and tab/unit dose forms of automatic dishwashing compositions.

Quite typically, cleaning compositions herein such as laundry detergents, laundry detergent additives, hard surface cleaners, synthetic and soap-based laundry bars, fabric softeners and fabric treatment liquids, solids and treatment articles of all kinds will require several adjuncts, though certain simply formulated products, such as bleach additives, may require only, for example, an oxygen bleaching agent and a surfactant as described herein. A comprehensive list of suitable laundry or cleaning adjunct materials can be found in WO 99/05242.

Common cleaning adjuncts include builders, enzymes, polymers not discussed above, bleaches, bleach activators, catalytic materials and the like excluding any materials already defined hereinabove. Other cleaning adjuncts herein can include suds boosters, suds suppressors (antifoams) and the like, diverse active ingredients or specialized materials such as dispersant polymers (e.g., from BASF Corp. or Rohm & Haas) other than those described above, color speckles, silvercare, anti-tarnish and/or anti-corrosion agents, dyes, fillers, germicides, alkalinity sources, hydrotropes, anti-oxidants, enzyme stabilizing agents, pro-perfumes, perfumes, solubilizing agents, carriers, processing aids, pigments, and, for liquid formulations, solvents, chelating agents, dye transfer inhibiting agents, dispersants, brighteners, suds suppressors, dyes, structure elasticizing agents, fabric softeners, anti-abrasion agents, hydrotropes, processing aids, and other fabric care agents, surface and skin care agents. Suitable examples of such other cleaning adjuncts and levels of use are found in U.S. Patent Nos. 5,576,282, 6,306,812 B1 and 6,326,348 B1.

The alkoxylated polyethylene imines and alkoxylated polyamines of the present invention can be used within compositions comprising any of those known adjunct materials, materials and compositions as those found in WO 99/05242, U.S. Patent Nos. 5,576,282, 6,306,812 B1 and 6,326,348 B1 and any of the other prior art documents mentioned and cited herein in this regard.

### Method of Use

The present invention includes a method for cleaning a targeted surface. As used herein "targeted surface" may include such surfaces such as fabric, dishes, glasses, and other cooking surfaces, hard surfaces, hair or skin. As used herein "hard surface" includes hard surfaces being found in a typical home such as hard wood, tile, ceramic, plastic, leather, metal, glass. Such method includes the steps of contacting a cleaning composition as defined herein before comprising the alkoxylated polyethylene imine and/or the alkoxylated polyamine, in neat form or diluted in wash liquor, with at least a portion of a targeted surface then optionally rinsing the targeted surface. Preferably the targeted surface is subjected to a washing step prior to the aforementioned optional rinsing step. For purposes of the present invention, washing includes, but is not limited to, scrubbing, wiping and mechanical agitation.

As will be appreciated by one skilled in the art, the cleaning compositions of the present invention are ideally suited for use in home care (hard surface cleaning compositions) and/or laundry applications.

The cleaning composition solution pH is chosen to be the most complimentary to a target surface to be cleaned spanning broad range of pH, from about 5 to about 11. For personal care such as skin and hair cleaning pH of such cleaning composition preferably has a pH from about 5 to about 8 for laundry cleaning compositions pH of from about 8 to about 10. The cleaning compositions are preferably employed at concentrations of from about 200 ppm to about 10,000 ppm in solution. The water temperatures preferably range from about 5 °C to about 100 °C.

For use in laundry cleaning compositions, the cleaning compositions are preferably employed at concentrations from about 200 ppm to about 10000 ppm in solution (or wash liquor). The water temperatures preferably range from about 5°C to about 60°C. The water to fabric ratio is preferably from about 1:1 to about 20:1.

The method may include the step of contacting a nonwoven substrate impregnated with an embodiment of the cleaning composition of the present invention. As used herein "nonwoven substrate" can comprise any conventionally fashioned nonwoven sheet or web having suitable basis weight, caliper (thickness), absorbency and strength characteristics. Examples of suitable commercially available nonwoven substrates include those marketed under the tradename SONTARA^{®} by DuPont and POLYWEB^{®} by James River Corp.

As will be appreciated by one skilled in the art, the cleaning compositions of the present invention are also ideally suited for use in liquid dish cleaning compositions. The method for using a liquid dish composition of the present invention comprises the steps of contacting soiled dishes with an effective amount, typically from about 0.5 ml. to about 20 ml. (per 25 dishes being treated) of the liquid dish cleaning composition of the present invention diluted in water.

The following examples shall further illustrate the present invention without restricting the scope of the invention.

### Methods

The amount of amines substituted with E1 - E5 = hydrogen can be determined by identification of primary, secondary and tertiary amino groups in ¹³C-NMR, as described for polyethylene imines in Lukovkin G.M., Pshezhetsky V.S., Murtazaeva G.A.: Europ. Polymer Journal 1973, 9, 559-565 and St. Pierre T., Geckle M.: ACS Polym. Prep. 1981, 22, 128-129.

¹³C-NMR spectra are recorded in CDCl₃ with a Bruker AV-401 instrument at room temperature. ¹H-NMR spectra are recorded in CDCl₃ or CD₃OD with a Bruker AV-401 instrument at room temperature.

Saponification values are measured according to DIN EN ISO 3657: 2013.

### Examples

### Example 1

Polyethylene imine, molecular weight 800 g/mole, reacted with 0.5 mole caprolactone per mol of NH-functionality, ethoxylated with 20 mole ethylene oxide per mol of NH-functionality.

### 1 a Polyethylene imine, molecular weight 800 glmole reacted with 0.5 mole caprolactone per mol of NH-functionality

In a 0.5 I four-neck vessel equipped with stirrer, reflux condenser, dropping funnel, thermometer, and nitrogen inlet 129.0 g polyethylene imine are placed and heated to 50°C. At this temperature 171.2 g caprolactone is added within 1 hour. Temperature of the reaction mixture rises during the addition of caprolactone to 80°C. After complete addition of caprolactone, the reaction mixture is heated to 120°C and is stirred for 15 hours at 120°C. ¹H-NMR in MeOD indicates complete conversion of caprolactone. 295.0 g of a light orange oil is obtained. ¹³C-NMR shows all primary amines are converted to amides, and 10 % of total amount of secondary amines (E1) are reacted with caprolactone. The saponification value is 52 mgKOH/g.

### 1 b Polyethylene imine, molecular weight 800 glmole, reacted with 0.5 mole caprolactone per mol of NH-functionality, ethoxylated with 10 mole ethylene oxide per mol of NH-functionality

In a 2 I autoclave 120.0 g polyethylene imine, molecular weight 800 g/mole, reacted with 0.5 mole caprolactone per mol of NH-functionality (example 1a) and 1.3 g potassium tert. butoxide are placed and the mixture is heated to 120°C. The vessel is purged three times with nitrogen. 528.6 g ethylene oxide is added within 10 h. To complete the reaction, the mixture is allowed to post-react for additional 5 h at 120°C. The reaction mixture is stripped with nitrogen and volatile compounds are removed in vacuo at 80°C. 645.0 g of a light brown oil is obtained

### 1 c Polyethylene imine, molecular weight 800 glmole, reacted with 0.5 mole caprolactone per mol of NH-functionality, ethoxylated with 20 mole ethylene oxide per mol of NH-functionality

In a 2 I autoclave 250.0 g Polyethylene imine, molecular weight800 g/mole reacted with 0.5 mole caprolactone per mol of NH-functionality, ethoxylated with 10 mole ethylene oxide per mol of NH-functionality (example 1b) and 0.4 g potassium tert. butoxide are placed and the mixture is heated to 120°C. The vessel is purged three times with nitrogen. 203.7 g ethylene oxide is added within 2 h. To complete the reaction, the mixture is allowed to post-react for additional 5 h at 120°C. The reaction mixture is stripped with nitrogen and volatile compounds are removed in vacuo at 80°C. 450.0 g of a light brown solid is obtained (saponification value: 9.0 mgKOH/g).

### Example 2

Polyethylene imine, molecular weight 800 g/mole, reacted with 1.0 mole caprolactone per mol of NH-functionality, ethoxylated with 10 mole ethylene oxide per mol of NH-functionality

### 2 a Polyethylene imine, molecular weight 800 glmole, reacted with 1.0 mole caprolactone per mol of NH-functionality

In a 0.5 I four-neck vessel equipped with stirrer, reflux condenser, dropping funnel, thermometer, and nitrogen inlet 86.0 g polyethylene imine are placed and heated to 90°C. At this temperature 228.3 g caprolactone is added within 1 hour. Temperature of the reaction mixture rises during the addition of caprolactone to 100°C. After complete addition of caprolactone, the reaction mixture is heated to 120°C and is stirred for 11 hours at 120°C. ¹H-NMR in MeOD indicates complete conversion of caprolactone. 310.0 g of a light orange oil is obtained (saponification value: 195 mgKOH/g). ¹³C-NMR shows all primary amines are converted to amides, and 15 % of total amount of secondary amines (E1) are reacted with caprolactone.

### 2 b Polyethylene imine, molecular weight 800 glmole, reacted with 1.0 mole caprolactone per mol of NH-functionality, ethoxylated with 10 mole ethylene oxide per mol of NH-functionality

In a 2 I autoclave 120.0 g polyethylene imine, molecular weight 800 g/mole, reacted with 1.0 mole caprolactone per mol of NH-functionality (example 2a) and 0.9 g potassium tert. butoxide are placed and the mixture is heated to 120°C. The vessel is purged three times with nitrogen. 352.2 g ethylene oxide is added within 5 h. To complete the reaction, the mixture is allowed to post-react for additional 5 h at 120°C. The reaction mixture is stripped with nitrogen and volatile compounds are removed in vacuo at 80°C. 440.0 g of a light brown oil is obtained.

### Example 3

Polyethylene imine, molecular weight 800 g/mole, reacted with 1.0 mole caprolactone per mol of NH-functionality, ethoxylated with 20 mole ethylene oxide per mol of NH-functionality

In a 2 I autoclave 100.0 g Polyethylene imine, molecular weight 800 g/mole, reacted with 1.0 mole caprolactone per mol of NH-functionality (example 2a) and 1.3 g potassium tert. butoxide are placed and the mixture is heated to 120°C. The vessel is purged three times with nitrogen. 560.7 g ethylene oxide is added within 10 h. To complete the reaction, the mixture is allowed to post-react for additional 5 h at 120°C. The reaction mixture is stripped with nitrogen and volatile compounds are removed in vacuo at 80°C. 659.0 g of a light brown solid is obtained (saponification value: 28.4 mg KOH/g).

### Example 4

Polyethylene imine, molecular weight 800 g/mole, reacted with 2.0 mole caprolactone per mol of NH-functionality, ethoxylated with 20 mole ethylene oxide per mol of NH-functionality

### 4 a Polyethylene imine, molecular weight 800 glmole, reacted with 2.0 mole caprolactone per mol of NH-functionality

In a 0.5 I four-neck vessel equipped with stirrer, reflux condenser, dropping funnel, thermometer, and nitrogen inlet 47.3 g polyethylene imine are placed and heated to 90°C. At this temperature 251.1 g caprolactone is added within 1 hour. Temperature of the reaction mixture rises during the addition of caprolactone to 100°C. After complete addition of caprolactone, the reaction mixture is heated to 120°C and is stirred for 35 hours at 120°C. ¹H-NMR in MeOD indicates complete conversion of caprolactone. 295.0 g of a light orange oil is obtained (saponification value: 302 mgKOH/g).

¹³C-NMR shows all primary amines are converted to amides, and 10 % of total amount of secondary amines (E1) are reacted with caprolactone.

### 4 b Polyethylene imine, molecular weight 800 glmole, reacted with 2.0 mole caprolactone per mole of NH-functionality, ethoxylated with 20 mole ethylene oxide per mole of NH-functionality

In a 2 I autoclave 139.0 g polyethylene imine, molecular weight 800 g/mole, reacted with 2.0 mole caprolactone per mol of NH-functionality (example 4a) and 1.2 g potassium tert. butoxide are placed and the mixture is heated to 120°C. The vessel is purged three times with nitrogen. 451.4 g ethylene oxide is added within 8 h. To complete the reaction, the mixture is allowed to post-react for additional 5 h at 120°C. The reaction mixture is stripped with nitrogen and volatile compounds are removed in vacuo at 80°C. 590.0 g of a viscous light brown oil is obtained (saponification value: 65.7 mgKOH/g).

### Example 5

Polyethylene imine, molecular weight 800 g/mole, reacted with 0.25 mole lactide per mol of NH-functionality, ethoxylated with 20 mole ethylene oxide per mole of NH-functionality

### 5 a Polyethylene imine, molecular weight 800 glmole, reacted with 0.25 mole lactide per mole of NH-functionality

In a 0.5 I four-neck vessel equipped with stirrer, reflux condenser, dropping funnel, thermometer, and nitrogen inlet 172.3 g polyethylene imine are placed and heated to 90°C. At this temperature 145.6 g lactide is added within 1 hour. Temperature of the reaction mixture rises during the addition of lactide to 110°C. After complete addition of lactide, the reaction mixture is heated to 120°C and is stirred for 2 hours at 120°C. ¹H-NMR in MeOD indicates complete conversion of lactide. 290 g of a light orange oil is obtained.

### 5 b Polyethylene imine, molecular weight 800 glmole, reacted with 0.25 mole lactide per mole of NH-functionality, ethoxylated with 20 mole ethylene oxide per mole of NH-functionality

In a 2 I autoclave 71.1 g polyethylene imine, molecular weight 800 g/mole, reacted with 0.25 mole lactide per mol of NH-functionality (example 5a) and 1.7 g potassium tert. butoxide are placed and the mixture is heated to 120°C. The vessel is purged three times with nitrogen. 792.9 g ethylene oxide is added within 15 h. To complete the reaction, the mixture is allowed to post-react for additional 5 h at 120°C. The reaction mixture is stripped with nitrogen and volatile compounds are removed in vacuo at 80°C. 860.0 g of a light brown viscous oil is obtained (saponification value: 13.1 mgKOH/g).

### Example 6

Polyethylene imine, molecular weight 800 g/mole, reacted with 0.5 mole γ-butyrolactone per mole of NH-functionality, ethoxylated with 20 mole ethylene oxide per mol of NH-functionality

### 6 a Polyethylene imine, molecular weight 800 glmole, reacted with 0.5 mole γ-butyrolactone per mole of NH-functionality

In a 0.5 I four-neck vessel equipped with stirrer, reflux condenser, dropping funnel, thermometer, and nitrogen inlet 172.0 g polyethylene imine are placed and heated to 50°C. At this temperature 172.2 g γ-butyrolactone is added within 0.5 hours. Temperature of the reaction mixture rises during the addition of γ-butyrolactone to 55°C. After complete addition of γ-butyrolactone, the reaction mixture is heated to 100°C and is stirred for 18 hours at 100°C. ¹H-NMR in MeOD indicates complete conversion of y-butyrolactone. 340.0 g of a yellow viscous oil is obtained (saponification value: 100.6 mgKOH/g). ¹³C-NMR shows all primary amines are converted to amides, and 13 % of total amount of secondary amines (E1) are reacted with γ-butyrolactone.

### 6 b Polyethylene imine, molecular weight 800 glmole, reacted with 0.5 mole γ-butyrolactone per mole of NH-functionality, ethoxylated with 20 mole ethylene oxide per mole of NH-functionality

In a 2 I autoclave 82.0 g polyethylene imine, molecular weight 800 g/mole, reacted with 0.5 mole γ-butyrolactone per mol of NH-functionality (example 6a) and 1.8 g potassium tert. butoxide are placed and the mixture is heated to 120°C. The vessel is purged three times with nitrogen. 840 g ethylene oxide is added within 12 h. To complete the reaction, the mixture is allowed to post-react for additional 5 h at 120°C. The reaction mixture is stripped with nitrogen and volatile compounds are removed in vacuo at 80°C. 924.0 g of a light brown solid is obtained (saponification value: 8.7 mgKOH/g).

### Example 7

### N4 amine (N,N-bis(3-aminopropyl)ethylene diamine), reacted with 4 mole caprolactone/mole, ethoxylated with 80 mole ethylene oxide/mole

### 7 a N4 amine (N,N-bis(3-aminopropyl)ethylene diamine), reacted with 4 mole caprolactone/mole

In a 0.5 I four-neck vessel equipped with stirrer, reflux condenser, dropping funnel, thermometer, and nitrogen inlet 319.6 g caprolactone are placed and heated to 80°C. At this temperature 122.0 g N4 amine (N,N-bis(3-aminopropyl)ethylene diamine) is added within 1 hour. Temperature of the reaction mixture rises during the addition of caprolactone to 110°C. After complete addition of caprolactone, the reaction mixture is heated to 120°C and is stirred for 21 hours at 120°C. ¹H-NMR in MeOD indicates complete conversion of caprolactone. 435.0 g of a light yellow oil is obtained (saponification value: 167.3 mgKOH/g). ¹³C-NMR shows all primary amines are converted to amides, and no secondary amines are reacted with caprolactone.

### 7 b N4 amine (N,N-bis(3-aminopropyl)ethylene diamine), reacted with 4 mole caprolactone/mole, ethoxylated with 80 mole ethylene oxide/mole

In a 2 I autoclave 100.0 g N4 amine (N,N-bis(3-aminopropyl)ethylene diamine), reacted with 4 mole caprolactone/mole (example 7a) and 1.4 g potassium tert. butoxide are placed and the mixture is heated to 120°C. The vessel is purged three times with nitrogen. 583.2 g ethylene oxide is added within 10 h. To complete the reaction, the mixture is allowed to post-react for additional 5 h at 120°C. The reaction mixture is stripped with nitrogen and volatile compounds are removed in vacuo at 80°C. 680.0 g of a viscous light brown oil is obtained (saponification value: 21.1 mgKOH/g).

### Example 8

Polyethylene imine, molecular weight 800 g/mole, reacted with 1.0 mole caprolactone per mol of NH-functionality, ethoxylated with 24 mole ethylene oxide per mol of NH-functionality and propoxylated with 16 mole propylene oxide per mol of NH functionality

### 8 a Polyethylene imine, molecular weight 800 g/mole, reacted with 1.0 mole caprolactone per mol of NH-functionality, ethoxylated with 5 mole ethylene oxide per mol of NH-functionality

In a 2 I autoclave 192.0 g Polyethylene imine, molecular weight 800 g/mole, reacted with 1.0 mole caprolactone per mol of NH-functionality (example 2a) and 0.92 g potassium tert. butoxide are placed and the mixture is heated to 120°C. The vessel is purged three times with nitrogen. 269.1 g ethylene oxide is added within 6 h. To complete the reaction, the mixture is allowed to post-react for additional 5 h at 120°C. The reaction mixture is stripped with nitrogen and volatile compounds are removed in vacuo at 80°C. 464.0 g of a light brown viscous oil is obtained (saponification value: 80.0 mgKOH/g).

### 8 b Polyethylene imine, molecular weight 800 g/mole, reacted with 1.0 mole caprolactone per mol of NH-functionality, ethoxylated with 24 mole ethylene oxide per mol of NH-functionality and propoxylated with 16 mole propylene oxide per mol of NH functionality

In a 2 I autoclave 150.9 g Polyethylene imine, molecular weight 800 g/mole, reacted with 1.0 mole caprolactone per mol of NH-functionality, and ethoxylated with 5 mole ethylene oxide per mole NH functionality (example 8a) and 1.4 g potassium tert. butoxide are placed and the mixture is heated to 120°C. The vessel is purged three times with nitrogen. 334.8 g ethylene oxide is added within 4 h. To complete the reaction, the mixture is allowed to post-react for additional 2 h at 120°C. 371.7 g propylene oxide is added within 5 hours, followed by 5 hours post-reaction time. The reaction mixture is stripped with nitrogen and volatile compounds are removed in vacuo at 80°C. 464.0 g of a light brown viscous oil is obtained (saponification value: 14.1 mgKOH/g).

### Example 9

Polyethylene imine, molecular weight 800 g/mole, reacted with 1.0 mole caprolactone per mol of NH-functionality, propoxylated with 15 mole propylene oxide per mol of NH functionality

In a 2 I autoclave 105.0 g Polyethylene imine, molecular weight 800 g/mole, reacted with 1.0 mole caprolactone per mol of NH-functionality (example 2a) and 1.4 g potassium tert. butoxide are placed and the mixture is heated to 140°C. The vessel is purged three times with nitrogen. 582.3 g propylene oxide is added within 6 h. To complete the reaction, the mixture is allowed to post-react for additional 6 h at 140°C. The reaction mixture is stripped with nitrogen and volatile compounds are removed in vacuo at 80°C. 663.0 g of a light brown viscous oil is obtained.

### Example 10

Polyethylene imine, molecular weight 800 g/mole, reacted with 1.0 mole caprolactone per mol of NH-functionality, propoxylated with 15 mole propylene oxide per mole of NH functionality and ethoxylated with 24 mole ethylene oxide per mole of NH- functionality In a 2 I autoclave 205.7 g Polyethylene imine, molecular weight 800 g/mole, reacted with 1.0 mole caprolactone per mol of NH-functionality, and propoxylated with 15 mole propylene oxide per mole NH functionality (example 9) and 0.42 g potassium tert. butoxide are placed and the mixture is heated to 120°C. The vessel is purged three times with nitrogen. 211.4 g ethylene oxide is added within 4 h. To complete the reaction, the mixture is allowed to post-react for additional 5 h at 120°C. The reaction mixture is stripped with nitrogen and volatile compounds are removed in vacuo at 80°C. 415.0 g of a light brown solid is obtained.

### Example 11

Hexamethylene diamine, reacted with 0.25 mole caprolactone/mole, propoxylated with 12 mole propylene oxide/mole

### 11 a Hexamethylene diamine, reacted with 0.25 mole caprolactone/mole

In a 0.5 I four-neck vessel equipped with stirrer, reflux condenser, dropping funnel, thermometer, and nitrogen inlet 612.4 g hexamethylene diamine and 5.4 g potassium methylate (30% in methanol) are placed and heated to 120°C. At this temperature 150.4 g caprolactone is added within 0.5 hour. After complete addition of caprolactone, the reaction mixture is stirred at 120°C for 3 hours at 120°C. ¹H-NMR in MeOD indicates complete conversion of caprolactone. 750.0 g of a light yellow oil, which solidifies at room temperature, is obtained.

### 11 b Hexamethylene diamine, reacted with 0.25 mole caprolactone/mole, propoxylated with 12 mole propylene oxide/mole

A 2 I autoclave is filled with 145.4 g hexamethylene diamine, reacted with 0.25 mole caprolactone/mole (example 11 a) and heated to 110°C. The vessel is purged three times with nitrogen. The vessel is heated to 140°C and 696.9 g propylene oxide is added within 10 h. To complete the reaction, the mixture is allowed to post-react for additional 7 h at 140°C. The reaction mixture is stripped with nitrogen and volatile compounds are removed in vacuo at 90°C. 840.0 g of a highly viscous light yellow oil is obtained (saponification value: 5.5 mgKOH/g).

### Example 12

Hexamethylene diamine, reacted with 0.25 mole caprolactone/mole, propoxylated with 32 mole propylene oxide/mole

A 2 I autoclave is filled with 252.5 g hexamethylene diamine, reacted with 0.25 mole caprolactone/mole and propoxylated with 12 mole propylene oxide /mole (example 11 b) and 0.97 g potassium tert. butoxide. The mixture is heated to 110°C, and the vessel is purged three times with nitrogen. The vessel is heated to 140°C and 348.5 g propylene oxide is added within 5 h. To complete the reaction, the mixture is allowed to post-react for additional 10 h at 140°C. The reaction mixture is stripped with nitrogen and volatile compounds are removed in vacuo at 90°C. 600.0 g of a highly viscous light brown oil is obtained (saponification value: 4.8 mgKOH/g).

### Example 13

Hexamethylene diamine, reacted with 0.25 mole caprolactone/mole, propoxylated with 60 mole propylene oxide/mole

A 2 I autoclave is filled with 168.3 g hexamethylene diamine, reacted with 0.25 mole caprolactone/mole and propoxylated with 12 mole propylene oxide /mole (example 11 b) and 1.3 g potassium tert. butoxide. The mixture is heated to 110°C, and the vessel is purged three times with nitrogen. The vessel is heated to 140°C and 557.6 g propylene oxide is added within 10 h. To complete the reaction, the mixture is allowed to post-react for additional 10 h at 140°C. The reaction mixture is stripped with nitrogen and volatile compounds are removed in vacuo at 90°C. 730.0 g of a highly viscous light brown oil is obtained (saponification value: 1.7 mgKOH/g).

### Example 14

Hexamethylene diamine, reacted with 0.25 mole caprolactone/mole, propoxylated with 60 mole propylene oxide/mole and ethoxylated with 40 mole ethylene oxide/mol

A 2 I autoclave is filled with 151.5 g hexamethylene diamine, reacted with 0.25 mole caprolactone/mole and propoxylated with 12 mole propylene oxide /mole (example 11 b) and 1.8 g potassium tert. butoxide. The mixture is heated to 110°C, and the vessel is purged three times with nitrogen. The vessel is heated to 140°C and 502.0 g propylene oxide is added within 8 h. To complete the reaction, the mixture is allowed to post-react for additional 2 h at 140°C. 317.2 g ethylene oxide is added within 5 hours, followed by 5 hours post-reaction time. The reaction mixture is stripped with nitrogen and volatile compounds are removed in vacuo at 80°C. 960.0 g of a highly viscous light brown oil is obtained.

### Example 15

### Hexamethylene diamine, reacted with 1 mole caprolactone/mole, propoxylated with 12 mole propylene oxide/mole

### 15 a Hexamethylene diamine, reacted with 1 mole caprolactone/mole

In a 2.0 I four-neck vessel equipped with stirrer, reflux condenser, dropping funnel, thermometer, and nitrogen inlet 631.0 g hexamethylene diamine is placed and heated to 50°C. 20.8 g potassium methylate (30% in methanol) is added. 619.0 g caprolactone is added within 0.5 hour, the temperature is allowed to rise to 114°C. After complete addition of caprolactone, the reaction mixture is heated to 120°C and is stirred for 2 hours at 120°C. ¹H-NMR in MeOD indicates complete conversion of caprolactone. Volatile compounds are removed in vacuo (30 mbar) at 80°C for 0.5 hours. 1240.0 g of an orange viscous oil is obtained.

### 15 b Hexamethylene diamine, reacted with 1 mole caprolactone/mole, propoxylated with 12 mole propylene oxide/mole

A 2 I autoclave is filled with 190.0 g hexamethylene diamine, reacted with 1 mole caprolactone/mole (example 15 a) and heated to 110°C. The vessel is purged three times with nitrogen. The vessel is heated to 140°C and 572.4 g propylene oxide is added within 10 h. To complete the reaction, the mixture is allowed to post-react for additional 7 h at 140°C. The reaction mixture is stripped with nitrogen and volatile compounds are removed in vacuo at 90°C. 760.0 g of a highly viscous yellow oil is obtained (saponification value: 12.0 mgKOH/g).

### Example 16

Hexamethylene diamine, reacted with 1 mole caprolactone/mole, propoxylated with 32 mole propylene oxide/mole

A 2 I autoclave is filled with 94.0 g hexamethylene diamine, reacted with 1 mole caprolactone/mole (example 15 a) and heated to 110°C. The vessel is purged three times with nitrogen. The vessel is heated to 140°C and 758.9 g propylene oxide is added within 10 h. To complete the reaction, the mixture is allowed to post-react for additional 7 h at 140°C. The reaction mixture is stripped with nitrogen and volatile compounds are removed in vacuo at 90°C. 850.0 g of a highly viscous yellow oil is obtained (saponification value: 7.9 mgKOH/g).

### Example 17

Hexamethylene diamine, reacted with 1 mole caprolactone/mole, propoxylated with 60 mole propylene oxide/mole

A 2 I autoclave is filled with 139.1 g hexamethylene diamine, reacted with 1 mole caprolactone/mole and propoxylated with 12 mole propylene oxide /mole (example 15b) and 0.94 g potassium tert. butoxide. The mixture is heated to 110°C, and the vessel is purged three times with nitrogen. The vessel is heated to 140°C and 418.2 g propylene oxide is added within 5 h. To complete the reaction, the mixture is allowed to post-react for additional 7 h at 140°C. The reaction mixture is stripped with nitrogen and volatile compounds are removed in vacuo at 90°C. 556.0 g of a highly viscous brown oil is obtained (saponification value: 5.4 mgKOH/g).

### Example 18

Hexamethylene diamine, reacted with 1 mole caprolactone/mole, propoxylated with 32 mole propylene oxide/mole and ethoxylated with 32 mole ethylene oxide/mol

A 2 I autoclave is filled with 231.8 g hexamethylene diamine, reacted with 1 mole caprolactone/mole and propoxylated with 12 mole propylene oxide /mole (example 15 b) and 1.5 g potassium tert. butoxide. The mixture is heated to 110°C, and the vessel is purged three times with nitrogen. The vessel is heated to 140°C and 290.4 g propylene oxide is added within 4 h. To complete the reaction, the mixture is allowed to post-react for additional 2 h at 140°C. 352.4 g ethylene oxide is added within 7 hours, followed by 5 hours post-reaction time. The reaction mixture is stripped with nitrogen and volatile compounds are removed in vacuo at 80°C. 870.0 g of a highly viscous light brown oil is obtained.

### Example 19

Hexamethylene diamine, reacted with 4 mole caprolactone/mole, propoxylated with 12 mole propylene oxide/mole

### 19 a Hexamethylene diamine, reacted with 4 mole caprolactone/mole

In a 2 I four-neck vessel equipped with stirrer, reflux condenser, dropping funnel, thermometer, and nitrogen inlet 232.4 g hexamethylene diamine and 19.1 g potassium methylate (30% in methanol) are placed and heated to 120°C. At this temperature 913.4 g caprolactone is added within 0.5 hour. After complete addition of caprolactone, the reaction mixture is stirred for 4 hours at 120°C. Volatile compounds are removed in vacuo (30 mbar) at 80°C for 0.5 hours. ¹H-NMR in MeOD indicates complete conversion of caprolactone. 1130.0 g of a light yellow oil is obtained.□

### 19 b Hexamethylene diamine, reacted with 4 mole caprolactone/mole, propoxylated with 32 mole propylene oxide/mole

A 2 I autoclave is filled with 402.0 g hexamethylene diamine, reacted with 4 mole caprolactone/mole (example 19 a) and heated to 80°C. The vessel is purged three times with nitrogen. The vessel is heated to 140°C and 486.8 g propylene oxide is added within 10 h. To complete the reaction, the mixture is allowed to post-react for additional 7 h at 140°C. The reaction mixture is stripped with nitrogen and volatile compounds are removed in vacuo at 80°C. 880.0 g of a highly viscous yellow oil is obtained (saponification value: 87.5 mgKOH/g).

### Example 20

Hexamethylene diamine, reacted with 4 mole caprolactone/mole, propoxylated with 20 mole propylene oxide/mole

A 2 I autoclave is filled with 96 g hexamethylene diamine, reacted with 4 mole caprolactone/mole (example 19 a) and heated to 80°C. The vessel is purged three times with nitrogen. The vessel is heated to 140°C and 193.7 g propylene oxide is added within 4 h. To complete the reaction, the mixture is allowed to post-react for additional 6 h at 140°C. The reaction mixture is stripped with nitrogen and volatile compounds are removed in vacuo at 80°C. 274.0 g of a highly viscous yellow oil is obtained (saponification value: 72.2 mgKOH/g).

### Example 21

Hexamethylene diamine, reacted with 4 mole caprolactone/mole, propoxylated with 32 mole propylene oxide/mole

A 2 I autoclave is filled with 96.0 g hexamethylene diamine, reacted with 4 mole caprolactone/mole (example 19 a) and heated to 80°C. The vessel is purged three times with nitrogen. The vessel is heated to 140°C and 310.4 g propylene oxide is added within 4 h. To complete the reaction, the mixture is allowed to post-react for additional 6 h at 140°C. The reaction mixture is stripped with nitrogen and volatile compounds are removed in vacuo at 80°C. 366.0 g of a highly viscous light yellow oil is obtained (saponification value: 56.9 mgKOH/g).

### Example 22

### N4 amine (N,N-bis(3-aminopropyl)ethylene diamine), reacted with 2 mole caprolactone/mole, propoxylated with 12 mole propylene oxide/mole

### 22 a N4 amine (N,N-bis(3-aminopropyl)ethylene diamine), reacted with 2 mole caprolactone/mole

In a 0.5 I four-neck vessel equipped with stirrer, reflux condenser, dropping funnel, thermometer, and nitrogen inlet 348.6 g N4 amine (N,N-bis(3-aminopropyl)ethylene diamine) and 13.4 g potassium methoxide (30 % in methanol) are placed. 456.6 g caprolactone is added within 0.75 hours. Temperature of the reaction mixture rises during the addition of caprolactone to 110°C. After complete addition of caprolactone, the reaction mixture is heated to 120°C and is stirred for 2 hours at 120°C. Volatile compounds are removed in vacuo (30 mbar) at 80°C for 0.5 hours. ¹H-NMR in MeOD indicates complete conversion of caprolactone. 801.0 g of a light yellow oil is obtained

### 22 b N4 amine (N,N-bis(3-aminopropyl)ethylene diamine), reacted with 2 mole caprolactone/mole, propoxylated with 12 mole propylene oxide/mole

In a 2 I autoclave 296.0 g N4 amine (N,N-bis(3-aminopropyl)ethylene diamine), reacted with 2 mole caprolactone/mole (example 22 a) is placed and heated to 140°C. The vessel is purged three times with nitrogen. 512.5 g propylene oxide is added within 8 h. To complete the reaction, the mixture is allowed to post-react for additional 5 h at 140°C. The reaction mixture is stripped with nitrogen and volatile compounds are removed in vacuo at 80°C. 798.0 g of a viscous light brown oil is obtained.

### Example 23

N4 amine (N,N-bis(3-aminopropyl)ethylene diamine), reacted with 2 mole caprolactone/mole, propoxylated with 64 mole propylene oxide/mole In a 2 I autoclave 217.6.0 g N4 amine (N,N-bis(3-aminopropyl)ethylene diamine), reacted with 2 mole caprolactone/mole, propoxylated with 12 mole propylene oxide/mole (example 22 b) and 1.3 g potassium tert. butoxide is placed and heated to 140°C. The vessel is purged three times with nitrogen. 606.3 g propylene oxide is added within 10 h. To complete the reaction, the mixture is allowed to post-react for additional 5 h at 140°C. The reaction mixture is stripped with nitrogen and volatile compounds are removed in vacuo at 80°C. 825.0 g of a viscous light brown oil is obtained.

### Example 24

### DETA (Bis(2-aminoethyl)amine), reacted with 1.5 mole caprolactone/mole, propoxylated with 12 mole propylene oxide/mole

### 24 a DETA (Bis(2-aminoethyl)amine), reacted with 1.5 mole caprolactone/mole

In a 1 I four-neck vessel equipped with stirrer, reflux condenser, dropping funnel, thermometer, and nitrogen inlet 309.5 g DETA (Bis(2-aminoethyl)amine) and 13.7 g potassium methoxide (30 % in methanol) are placed. 513.6 g caprolactone is added within 0.75 hours. Temperature of the reaction mixture rises during the addition of caprolactone to 70°C. After complete addition of caprolactone, the reaction mixture is heated to 120°C and is stirred for 2 hours at 120°C. Volatile compounds are removed in vacuo (30 mbar) at 80°C for 0.5 hours. ¹H-NMR in MeOD indicates complete conversion of caprolactone. 801.0 g of a light yellow oil is obtained

### 24 b DETA (Bis(2-aminoethyl)amine), reacted with 1.5 mole caprolactone/mole, propoxylated with 12 mole propylene oxide/mole

In a 2 I autoclave 219.5 g DETA (Bis(2-aminoethyl)amine), reacted with 1.5 mole caprolactone/mole (example 24 a) is placed and heated to 140°C. The vessel is purged three times with nitrogen. 557.6 g propylene oxide is added within 10 h. To complete the reaction, the mixture is allowed to post-react for additional 5 h at 140°C. The reaction mixture is stripped with nitrogen and volatile compounds are removed in vacuo at 80°C. 767.0 g of a viscous light brown oil is obtained.

### Example 25

DETA (Bis(2-aminoethyl)amine), reacted with 1.5 mole caprolactone/mole, propoxylated with 48 mole propylene oxide/mole

In a 2 I autoclave 239.9 g DETA (Bis(2-aminoethyl)amine), reacted with 1.5 mole caprolactone/mole, propoxylated with 12 mole propylene oxide/mole (example 24 b) and 1.2 g potassium tert. butoxide are placed and heated to 140°C. The vessel is purged three times with nitrogen. 525.6 g propylene oxide is added within 8 h. To complete the reaction, the mixture is allowed to post-react for additional 5 h at 140°C. The reaction mixture is stripped with nitrogen and volatile compounds are removed in vacuo at 80°C. 770.0 g of a viscous light brown oil is obtained.

### Example 26

### 1,3-Propane diamine, reacted with 1 mole caprolactone/mole, propoxylated with 12 mole propylene oxide/mole

### 26 a 1,3-Propane diamine, reacted with 1 mole caprolactone/mole

In a 1 I four-neck vessel equipped with stirrer, reflux condenser, dropping funnel, thermometer, and nitrogen inlet 370.6 g 1,3-propane diamine and 15.7 g potassium methoxide (30 % in methanol) are placed. 570.7 g caprolactone is added within 0.75 hours. Temperature of the reaction mixture rises during the addition of caprolactone to 60°C. After complete addition of caprolactone, the reaction mixture is heated to 120°C and is stirred for 2 hours at 120°C. Volatile compounds are removed in vacuo (30 mbar) at 80°C for 0.5 hours. ¹H-NMR in MeOD indicates complete conversion of caprolactone. 935.0 g of a light yellow oil is obtained.

### 26 b 1,3-Propane diamine, reacted with 1 mole caprolactone/mole, propoxylated with 12 mole propylene oxide/mole

In a 2 I autoclave 188.3 g 1,3-propane diamine, reacted with 1 mole caprolactone/mole (example 26 a) is placed and heated to 140°C. The vessel is purged three times with nitrogen. 696.9 g propylene oxide is added within 12 h. To complete the reaction, the mixture is allowed to post-react for additional 5 h at 140°C. The reaction mixture is stripped with nitrogen and volatile compounds are removed in vacuo at 80°C. 881.0 g of a viscous light brown oil is obtained.

### Example 27

### 1,3-Propane diamine, reacted with 1 mole caprolactone/mole, propoxylated with 32 mole propylene oxide/mole

In a 2 I autoclave 309.8 g 1,3-propane diamine, reacted with 1 mole caprolactone/mole, propoxylated with 12 mole propylene oxide/mole (example 26 b) and 1.1 g potassium tert. butoxide are placed and heated to 140°C. The vessel is purged three times with nitrogen. 406.6 g propylene oxide is added within 6 h. To complete the reaction, the mixture is allowed to post-react for additional 5 h at 140°C. The reaction mixture is stripped with nitrogen and volatile compounds are removed in vacuo at 80°C. 718.0 g of a viscous light brown oil is obtained.

### Example 28

### MCDA (methylcyclohexyl diamine, mixture of isomers), reacted with 1 mole caprolactone/mole, propoxylated with 12 mole propylene oxide/mole

### 28 a MCDA (methylcyclohexyl diamine, mixture of isomers), reacted with 1 mole caprolactone/mole

In a 1 I four-neck vessel equipped with stirrer, reflux condenser, dropping funnel, thermometer, and nitrogen inlet 128.4 g MCDA (methylcyclohexyl diamine, mixture of isomers) and 4.0 g potassium methoxide (30 % in methanol) are placed. 114.1 g caprolactone is added within 0.5 hour. Temperature of the reaction mixture rises during the addition of caprolactone to 60°C. After complete addition of caprolactone, the reaction mixture is heated to 120°C and is stirred for 2 hours at 120°C. Volatile compounds are removed in vacuo (30 mbar) at 80°C for 0.5 hours. ¹H-NMR in MeOD indicates complete conversion of caprolactone. 242.0 g of a light yellow oil is obtained.

### 28 b MCDA (methylcyclohexyl diamine, mixture of isomers), reacted with 1 mole caprolactone/mole, propoxylated with 12 mole propylene oxide/mole

In a 2 I autoclave 241.2 g MCDA (methylcyclohexyl diamine, mixture of isomers), reacted with 1 mole caprolactone/mole (example 28 a) is placed and heated to 140°C. The vessel is purged three times with nitrogen. 348.5 g propylene oxide is added within 5 h. To complete the reaction, the mixture is allowed to post-react for additional 5 h at 140°C. The reaction mixture is stripped with nitrogen and volatile compounds are removed in vacuo at 80°C. 585.0 g of a viscous light brown oil is obtained.

### Example 29

MCDA (methylcyclohexyl diamine, mixture of isomers), reacted with 1 mole caprolactone/mole, propoxylated with 32 mole propylene oxide/mole In a 2 I autoclave 353.8 g MCDA (methylcyclohexyl diamine, mixture of isomers), reacted with 1 mole caprolactone/mole, propoxylated with 12 mole propylene oxide/mole (example 28 b) and 1.1 g potassium tert. butoxide are placed and heated to 140°C. The vessel is purged three times with nitrogen. 348.5 g propylene oxide is added within 6 h. To complete the reaction, the mixture is allowed to post-react for additional 5 h at 140°C. The reaction mixture is stripped with nitrogen and volatile compounds are removed in vacuo at 80°C. 700.0 g of a viscous light brown oil is obtained.

### Example 30

### Hexamethylene diamine, reacted with 1 mole g-butyrolactone/mole, propoxylated with 12 mole propylene oxide/mole

### 30 a Hexamethylene diamine, reacted with 1 mole g-butyrolactone /mole

In a 2.0 I four-neck vessel equipped with stirrer, reflux condenser, dropping funnel, thermometer, and nitrogen inlet 232.4 g hexamethylene diamine is placed and heated to 45°C. 6.7 g potassium methylate (30% in methanol) is added. 172.2 g g-butyrolactone is added within 1 hour, the temperature is allowed to rise to 118°C. After complete addition of caprolactone, the reaction mixture is heated to 120°C and is stirred for 2 hours at 120°C. ¹H-NMR in MeOD indicates complete conversion of caprolactone. Volatile compounds are removed in vacuo (30 mbar) at 80°C for 0.5 hours. 404.5 g of a light brown solid is obtained.

### 30 b Hexamethylene diamine, reacted with 1 mole g-butyrolactone /mole, propoxylated with 12 mole propylene oxide/mole

A 2 I autoclave is filled with 203.0 g hexamethylene diamine, reacted with 1 mole g-butyrolactone /mole (example 30 a) and 1.8 g potassium butoxide and heated to 110°C. The vessel is purged three times with nitrogen. The vessel is heated to 140°C and 696.9 g propylene oxide is added within 15 h. To complete the reaction, the mixture is allowed to post-react for additional 10 h at 140°C. The reaction mixture is stripped with nitrogen and volatile compounds are removed in vacuo at 90°C. 899.0 g of a highly viscous brown oil is obtained.

### Example 31

### Hexamethylene diamine, reacted with 1 mole g-butyrolactone /mole, propoxylated with 32 mole propylene oxide/mole

A 2 I autoclave is filled with 224.8 g hexamethylene diamine, reacted with 1 mole g-butyrolactone /mole and propoxylated with 12 mole propylene oxide/mole (example 30 b) and heated to 110°C. The vessel is purged three times with nitrogen. The vessel is heated to 140°C and 290.4 g propylene oxide is added within 5 h. To complete the reaction, the mixture is allowed to post-react for additional 10 h at 140°C. The reaction mixture is stripped with nitrogen and volatile compounds are removed in vacuo at 90°C. 515.0 g of a viscous brown oil is obtained.

### Example 32

### Hexamethylene diamine, reacted with 1 mole caprolactone/mole, propoxylated with 60 mole propylene oxide/mole and ethoxylated with 90 mole ethylene oxide/mol

A 2 I autoclave is filled with 209.0 g hexamethylene diamine, reacted with 1 mole caprolactone/mole and propoxylated with 32 mole propylene oxide /mole (example 16) The mixture is heated to 140°C, and the vessel is purged three times with nitrogen. 162.6 g propylene oxide is added within 10 h. To complete the reaction, the mixture is allowed to post-react for additional 23 h at 140°C. 369.5 g ethylene oxide is added within 7 hours, followed by 10 hours post-reaction time. The reaction mixture is stripped with nitrogen and volatile compounds are removed in vacuo at 80°C. 735.0 g of a highly viscous light brown oil is obtained.

### Example 33

### Hexamethylene diamine, reacted with 1 mole caprolactone/mole, ethoxylated with 90 mole ethylene oxide/mol, and propoxylated with 60 mole propylene oxide/mole

### 33 a Hexamethylene diamine, reacted with 1 mole caprolactone/mole, ethoxylated with 30 mole ethylene oxide/mole

A 2 I autoclave is filled with 120.0 g hexamethylene diamine, reacted with 1 mole caprolactone/mole (example 15 a) and heated to 140°C. The vessel is purged three times with nitrogen. 685.0 g ethylene oxide is added within 6 h. To complete the reaction, the mixture is allowed to post-react for additional 6 h at 140°C. The reaction mixture is stripped with nitrogen and volatile compounds are removed in vacuo at 90°C. 785.0 g of a highly viscous brown oil is obtained.

### 33 b Hexamethylene diamine, reacted with 1 mole caprolactone/mole, ethoxylated with 90 mole ethylene oxide/mole, and propoxylated with 60 mole propylene oxide /mole

A 2 I autoclave is filled with 120.0 g hexamethylene diamine, reacted with 1 mole caprolactone/mole and ethoxylated with 30 ethylene oxide/mole (example 33 a) and 1.1 g potassium tert. butoxide and heated to 140°C. The vessel is purged three times with nitrogen. 510.0 g ethylene oxide is added within 6 h. To complete the reaction, the mixture is allowed to post-react for additional 6 h at 140°C. 672.6 g propylene oxide are added within 15 h, followed by 15 h post reaction time at 140°C. The reaction mixture is stripped with nitrogen and volatile compounds are removed in vacuo at 90°C. 1466.0 g of a highly viscous brown oil is obtained.

### Example 34

### Hexamethylene diamine, reacted with 1 mole caprolactone/mole, alkoxylated with a mixture of 90 mole ethylene oxide/mole, and 60 mole propylene oxide/mole

### 34 a Hexamethylene diamine, reacted with 1 mole caprolactone/mole, alkoxylated with a mixture of 15 mole ethylene oxide/mole, and 10 mole propylene oxide/mole

A 2 I autoclave is filled with 115.8 g hexamethylene diamine, reacted with 1 mole caprolactone/mole (example 15 a) and heated to 140°C. The vessel is purged three times with nitrogen. A mixture of 330.4 g ethylene oxide and 290.4 g propylene oxide is added within 7 h. To complete the reaction, the mixture is allowed to post-react for additional 6 h at 140°C. The reaction mixture is stripped with nitrogen and volatile compounds are removed in vacuo at 90°C. 736.0 g of a highly viscous brown oil is obtained.

### 34 b Hexamethylene diamine, reacted with 1 mole caprolactone/mole, alkoxylated with a mixture of 90 mole ethylene oxide/mole, and 60 mole propylene oxide/mole

A 2 I autoclave is filled with 120.0 g Hexamethylene diamine, reacted with 1 mole caprolactone/mole, alkoxylated with a mixture of 15 mole ethylene oxide/mole, and 10 mole propylene oxide/mole (example 34 a) and 0.6 g potassium tert. butoxide and heated to 140°C. The vessel is purged three times with nitrogen. A mixture of 314.3 g ethylene oxide and 276.3 g propylene oxide is added within 7 h. To complete the reaction, the mixture is allowed to post-react for additional 6 h at 140°C. The reaction mixture is stripped with nitrogen and volatile compounds are removed in vacuo at 90°C. 718.0 g of a highly viscous brown oil is obtained.

### Example 35

### Hexamethylene diamine, reacted with 1 mole caprolactone/mole, propoxylated with 32 mole propylene oxide/mole and ethoxylated with 48 mole ethylene oxide/mol

A 2 I autoclave is filled with 211.0 g hexamethylene diamine, reacted with 1 mole caprolactone/mole and propoxylated with 32 mole propylene oxide /mole (example 16). The mixture is heated to 140°C, and the vessel is purged three times with nitrogen. 214.0 g ethylene oxide is added within 3 h. To complete the reaction, the mixture is allowed to post-react for additional 5 h at 140°C. The reaction mixture is stripped with nitrogen and volatile compounds are removed in vacuo at 80°C. 420.0 g of a light brown solid is obtained.

### Example 36

### Hexamethylene diamine, reacted with 4 mole caprolactone/mole, propoxylated with 32 mole propylene oxide/mole

### 36 a Hexamethylene diamine, reacted with 4 mole caprolactone/mole

In a 0.5 I four-neck vessel equipped with stirrer, reflux condenser, dropping funnel, thermometer, and nitrogen inlet 66.2 g hexamethylene diamine and 5.4 g potassium methylate (30% in methanol) are placed and heated to 90°C. At this temperature 260.2 g caprolactone is added within 0.5 hour. After complete addition of caprolactone, the reaction mixture is heated to 120°C and is stirred for 7 hours at 120°C. ¹H-NMR in MeOD indicates complete conversion of caprolactone. 320.0 g of a light yellow oil is obtained (saponification value: 221.4 mgKOH/g). ¹³C-NMR shows 87.5 % of primary amines are converted to amides, and 12.5 % of primary amines remain unmodified.

### 36 b Hexamethylene diamine, reacted with 4 mole caprolactone/mole, propoxylated with 32 mole propylene oxide/mole

A 2 I autoclave is filled with 96.0 g hexamethylene diamine, reacted with 4 mole caprolactone/mole (example 8a) and heated to 80°C. The vessel is purged three times with nitrogen. The vessel is heated to 140°C and 310.4 g propylene oxide is added within 4 h. To complete the reaction, the mixture is allowed to post-react for additional 6 h at 140°C. The reaction mixture is stripped with nitrogen and volatile compounds are removed in vacuo at 80°C. 366.0 g of a highly viscous light yellow oil is obtained (saponification value: 56.9 mgKOH/g).

### Comparative example 1

PEI800+ 20 EO/NH, synthesized as described in WO9532272

### Comparative example

Polyethylene imine, molecular weight 800 g/mole, ethoxylated with 20 mole ethylene oxide per mole of NH-functionality

### Comparative example 1a

Polyethylene imine, molecular weight 800 g/mole, ethoxylated with 1 mole ethylene oxide per mole of NH-functionality
A 5 I autoclave is charged with 1943.0 g of a polyethylenimine with an average molecular weight of 800 g/mol and 97.0 g water. The reactor is purged three times with nitrogen and heated to 110°C. 1789.0 g ethylene oxide is added within 14 hours. To complete the reaction, the reaction mixture is allowed to post-react for 5 hours. Water and volatile compounds are removed in vacuo at 90°C. A highly viscous yellow oil (3688.0 g, water content: 2.6 %, pH: 11.05 (5% in water)) is obtained.

### Comparative example 1b

Polyethylene imine, molecular weight 800 g/mole, ethoxylated with 20 mole ethylene oxide per mole of NH-functionality

Product similar to comparative example 1 a (144.6 g, 92.7% in water) and 4.34 g potassium hydroxide (50% in water) are placed in a 2 I autoclave. The mixture is heated under vacuum (< 10 mbar) to 120°C and stirred for 2 hours to remove water. The reactor is purged three times with nitrogen and the mixture is heated to 140°C. 1470.7 g ethylene oxide is added within 14 hours. To complete the reaction, the mixture is allowed to post-react for 5 hours. Volatile compounds are removed in vacuo. 1615.0 g of a slightly brown solid were obtained (melting point: 35.4°C).

### Biodegradation

Biodegradation in wastewater was tested in triplicate using the OECD 301F manometric respirometry method. 30 mg/mL test substance is inoculated into wastewater taken from Mannheim Wastewater Treatment Plant and incubated in a closed flask at 25°C for 28 days. The consumption of oxygen during this time is measured as the change in pressure inside the flask using an OxiTop^{®} C (Xylem Analytics Germany Sales GmbH & Co KG). Evolved CO₂ is absorbed using an NaOH solution. The amount of oxygen consumed by the microbial population during biodegradation of the test substance, after correction using a blank, is expressed as a % of the ThOD (Theoretical Oxygen Demand).

**Table 1a**

| | | Saponification value [mgKOH/g] | Biodegradation | |
|---|---|---|---|---|
| | | | 28 days [%] | 56 days [%] |
| Comparative example 1b | PEI800 + 20 EO/NH | 0 | < 20 | < 20 |
| Example 1 | PEI800 | 9.0 | 28 | 34 |
| | + 0.5 Caprolactone/NH | | | |
| | + 20 EO/NH | | | |
| Example 2 | PEI800 | n.a. | 43 | 46 |
| | + 1.0 Caprolactone/NH | | | |
| | + 10 EO/NH | | | |
| Example 3 | PEI800 | 28.4 | 38 | 43 |
| | + 1.0 Caprolactone/NH | | | |
| | + 20 EO/NH | | | |
| Example 4 | PEI800 | 65.7 | 50 | 52 |
| | + 2.0 Caprolactone/NH | | | |
| | + 20 EO/NH | | | |
| Example 5 | PEI800 | 13.1 | 43 | 47 |
| | + 0.25 lactide/NH | | | |
| | + 20 EO/NH | | | |
| Example 6 | PEI800 | 8.7 | 23 | 28 |
| | + 0.5 γ-Butyrolactone/NH | | | |
| | + 20 EO/NH | | | |
| Example 7 | N4 amine | 21.1 | 43 | 49 |
| | + 4.0 caprolactone/mole | | | |
| | + 80 EO/mole | | | |

**Table 1b**

| | | Biodegradation 28 days [%] |
|---|---|---|
| Comparative example 1b | PEI800 + 20 EO/NH | < 20 |
| Example 8 | PEI800 + 1,0 Caprolacton/NH + 5 EO/NH + 19 EO/NH + 16 PO/NH | 34 |
| Example 9 | PEI800 + 1,0 Caprolacton/NH + 15 PO/NH | 27 |
| Example 10 | (PEI800 + 1,0 Caprolacton/NH + 15 PO/NH) + 24 EO/NH | |
| Example 11 | HMDA + 0,25 Caprolacton/mol + 12 PO/mol | 37 |
| Example 12 | HMDA + 0,25 Caprolacton/mol + 32 PO/mol | 49 |
| Example 13 | HMDA + 0,25 Caprolacton/mol + 60 PO/mol | 16 |
| Example 14 | HMDA + 0,25 Caprolacton/mol + 60 PO/mol + 40 EO/mol | |
| Example 15 | HMDA + 1 Caprolacton/mol + 12 PO/mol | 50 |
| Example 16 | HMDA + 1 Caprolacton/mol + 32 PO/mol | 60 |
| Example 17 | HMDA + 1 Caprolacton/mol + 60 PO/mol | 23 |
| Example 18 | HMDA + 1 Caprolacton/mol + 32 PO/mol + 32 EO/mol | |
| Example 19 | HMDA + 4 Caprolacton/mol + 12 PO/mol | 75 |
| Example 20 | HMDA + 4 Caprolacton/NH + 20 PO/mol | 72 |
| Example 21 | HMDA + 4 Caprolacton/mol + 32 PO/mol | 74 |
| Example 22 | N4 amin + 2 Caprolacton/mol + 12 PO/mol | |
| Example 23 | N4 amin + 2 Caprolacton/mol + 64 PO/mol | |
| Example 24 | DETA + 1,5 Caprolacton/mol + 12 PO/mol | |
| Example 25 | DETA + 1,5 Caprolacton/mol + 48 PO/mol | |
| Example 26 | 1,3-Propandiamin + 1 Caprolacton/mol + 12 PO/mol | |
| Example 27 | 1,3-Propandiamin + 1 Caprolacton/mol + 32 PO/mol | |
| Example 28 | MCDA + 1 Caprolacton/mol + 12 PO/mol | |
| Example 29 | MCDA + 1 Caprolacton/mol + 32 PO/mol | |
| Example 30 | HMDA + 1 g-Butyrolactone/mol + 12 PO/mol | |
| Example 31 | HMDA + 1 g-Butyrolactone /mol + 32 PO/mol | |
| Example 32 | HMDA + 1 Caprolacton/mol + 60 PO/mol + 90 EO/mol | 16 |
| Example 33 | (HMDA + 1 Caprolacton/mol) + 90 EO/mol + 60 PO/mol | 17 |
| Example 34 | (HMDA + 1 Caprolacton/mol) + 90 EO/mol + 60 PO/mol random | 11 |
| Example 35 | (HMDA + 1 Caprolacton/mol + 32 PO/mol) + 48 EO/mol | 13 |

### Application test for washing machine

The soiled swatches are washed together with cotton ballast fabric (3.5 kg) and 1 soil ballast sheet wfk SBL 2004 in a Miele Household washing machine with cotton shirt program 30°C. After the wash the fabrics are dried in the air.

The washing performance is determined using the MACH5 multi area color measurement which gives LAB values and ΔE calculated between unwashed and washed stain. The higher the value, the better is the performance.

**Table 2: Washing conditions**

| | |
|---|---|
| Test equipment | Miele Softtronic W1935 WTL |
| Washing program | Cotton short 30°C, 1200 U/min. |
| Dosage | 30 ml Test detergent |
| Washing cycles | 1 |
| Water hardness | 2.5 mmol/l Ca²⁺: Mg²⁺ : HCO₃⁻ 4:1:8 |
| Ballast fabric | 3.5 kg cotton towels |
| | 1 SBL 2004 ³⁾ |
| Soiled fabric | CFT- ¹⁾ |
| | CFT- ²⁾ |

| | |
|---|---|
| ^{1) 2)} Producer: Center for Testmaterials BV, NL-3130 AC Vlaardingen ³⁾ Producer: wfk Testgewebe GmbH, Christenfeld 10, D-41379 Brueggen | |

**Table 3: Composition of the test detergent**

| Ingredient | [% weight] calculated 100 % active |
|---|---|
| C₁₃C₁₅-Oxo alcohol with 7 EO | 5.4 |
| Linear C₁₀C₁₃ alkyl benzene sulfonic acid | 5.5 |
| Coco fatty acid K 12-18 | 2.4 |
| C₁₂C₁₄-Fatty alcohol ethersulfate (2EO), Na- | 5.4 |
| NaOH | 2.2 |
| 1,2 Propylene glycol | 6.0 |
| Ethanol | 2.0 |
| Water | Up to 100 |

**Table 4: Applications**

| | | Example 2 | Example 3 |
|---|---|---|---|
| | No polymer added | PEI800 | PEI800 |
| | | + 1.0 Caprolactone/NH | + 1.0 Caprolactone/NH |
| | | + 10 EO/NH | + 20 EO/NH |
| soil | | Δ E | Δ E |
| PCH144 red pottery clay | 18.8 | 21.4 | 21.0 |
| C-S-01 blood, aged | 12.5 | 13.8 | 13.8 |
| C-S-70 chocolate mousse | 23.3 | 25.0 | 24.5 |

### Primary cleaning performance on oily/fatty stains

To determine the primary detergency, the cleaning performance on 16 different oily/fatty stains on cotton, polycotton and polyester fabrics (CFT, Vlaardingen, The Netherlands) was measured by determining the color difference (delta E) between the stains after wash and the unsoiled white fabric using a reflectometer (Datacolor SF600 plus). Each experiment containing the 16 different circular oily/fatty stains (Lipstick, Make-Up, Beef Fat, Frying Fat, Burnt Butter, Palm Oil, Sebum BEY, Sebum Tefo, Collar Stain; All on different fabrics) was repeated 6 times, and the obtained data was used to calculate the average delta E value.

By using these delta E values, the so-called "standardized cleaning performance" (delta delta E) has been calculated for each individual stain. The "standardized cleaning performance" (delta delta E) is the difference of the performance of the laundry detergent including the inventive biodegradable amphiphilic alkoxylated polyalkylene imine or alkoxylated polyamine polymer or comparative polymer, respectively, vs. the laundry detergent w/o any inventive biodegradable amphiphilic alkoxylated polyalkylene imine or alkoxylated polyamine polymer or comparative polymer, respectively.

Table 5 shows the composition of the laundry detergent, Table 6 shows the washing test conditions and Table 7 summarizes the obtained standardized cleaning performance. The standardized cleaning performance shown in Table 7 is the sum of the standardized cleaning performance of all 16 stains. The bigger the sum of the delta delta E value, the bigger the positive contribution of the inventive biodegradable amphiphilic alkoxylated polyalkylene imine or alkoxylated polyamine polymer or comparative polymer, respectively, on the cleaning performance.

**Table 5: Composition of the liquid laundry detergent.**

| Ingredients | LLD.1 * |
|---|---|
| Linear C₁₂C₁₄-alkylbenzenesulfonic acid | 5.50 |
| C₁₂-fatty alcohol x 2 EO sulfate | 5.40 |
| C₁₂C₁₅-fatty alcohol x 7 EO | 5.40 |
| Coconut C12-C18 fatty acid | 2.40 |
| Sodium hydroxide | 2.20 |
| 1,2-Propylene glycol | 6.00 |
| Ethanol | 2.00 |
| Sodium citrate | 3.00 |
| Demin. water | add 100 |
| pH value | 8.5 |

| | |
|---|---|
| *) All data are wt% active ingredient, independent of the respective product form. | |

**Table 6: Washing conditions for evaluation of primary cleaning performance on oily/fatty stains.**

| Washing conditions | |
|---|---|
| Device | Launder-O-Meter from SDL Atlas, Rock Hill, USA |
| Washing liquor | 250 mL |
| Washing time | 60 minutes |
| Washing temperature | 30°C |
| Detergent concentration | 3.0 g/L |
| Water hardness (Ca:Mg:HCO3) | 2.5 mmol/L (4:1:8) (14 °dH) |
| Fabric to liquor ratio | 1:10 |
| Biodegradable amphiphilic alkoxylated polyalkylene imine polymer or alkoxylated polyamine or comparative polymer addition | 2.83% by weight (vs. liquid laundry detergent) of the polymer, 100% active ingredient |
| Test fabric * | 16 different circular oily/fatty stains (KC-H122, KC-H176, KC-H015, KC-H187, PC-H082, PC-H212, PC-H210, PC-H252, P-H122, P-H129, P-H015, P-H187, P-H082, P-H212, P-H210, P-H252) (CFT, Vlaardingen, The Netherlands) |
| Ballast fabric | Polyester and cotton ballast, to yield a 1:1 ratio of polyester/cotton fabric per experiment |

| | |
|---|---|
| *) After the washing experiment, the test fabrics were rinsed with 14 °dH water (2 times), followed by drying at ambient room temperature overnight, prior to the measurement with the reflectometer. | |

**Table 7: Results from washing tests (primary cleaning performance on oily/fatty stains).**

| Detergent | Polymer | Concentration of polymeric additive * | Standardized cleaning performance (sum delta delta E) |
|---|---|---|---|
| LLD.1 | Example 8 | 2.83 wt% | 47.3 |
| LLD.1 | Example 9 | 2.83 wt% | 40.2 |
| LLD.1 | Example 10 | 2.83 wt% | 17.5 |
| LLD.1 | Comp. Ex. 1b | 2.83 wt% | 0.2 |

| | | | |
|---|---|---|---|
| *) All data are wt% active ingredient, independent of the respective product form. | | | |

A standardized cleaning performance lower than 10 (sum delta delta E) is not significant/not visible.

## Claims

1. An alkoxylated polyalkylene imine or alkoxylated polyamine of the general formula (I) 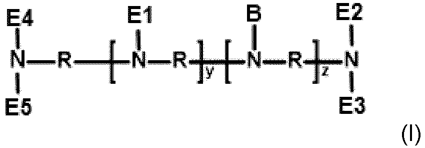 in which the variables are each defined as follows:
R represents identical or different, i) linear or branched C₂-C₁₂-alkylene radicals or ii) an etheralkyl unit of the following formula (III): 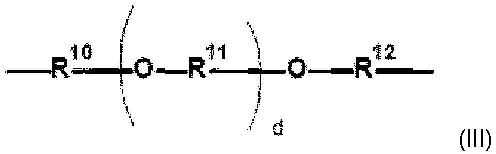 in which the variables are each defined as follows:
R¹⁰, R¹¹, R¹² represent identical or different, linear or branched C₂-C₆-alkylene radicals and
d is an integer having a value in the range of 0 to 50 or
iii) C₅-C₁₀-cycloalkylene radicals optionally substituted with at least one C₁-C₃-alkyl;
B represents a continuation of the alkoxylated polyalkylene imine by branching;
y and z are each an integer having a value in the range of 0 to 150, under the provisio that both z and y are 0 in case R are C₅-C₁₀-cycloalkylene radicals optionally substituted with at least one C₁-C₃-alkyl;
E1, E2 and E4 represent an identical or different residue according to formula (IIa) or an identical or different residue according to formula (IIb), wherein the residue according to formula (IIa) is an alkylenoxy unit defined as follows 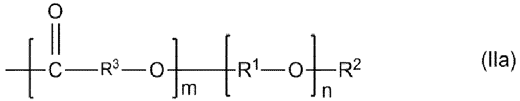 in which the variables are each defined as follows:
R¹ represents C₂-C₂₂-(1,2-alkylene) radicals;
R² represents hydrogen or C₁-C₄-alkyl or C₇-C₂₂-aralkyl in case z is an integer ≥ 1 within general formula (I), wherein said C₇-C₂₂-aralkyl comprises phenyl, naphthyl or anthracyl or
R² represents hydrogen or C₁-C₄-alkyl or C₇-C₂₂-aralkyl in case z is 0 within general formula (I), wherein said C₇-C₂₂-aralkyl comprises phenyl, naphthyl or anthracyl;
R³ represents linear or branched C₁-C₂₂-alkylene radicals;
m is an integer having a value of at least 1 to 10;
n is an integer having a value of at least 5 to 100;
and wherein the residue according to formula (IIb) is an alkylenoxy unit defined as follows 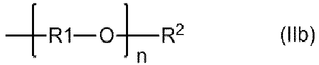 in which the variables are defined as follows:
R¹ represents C₂-C₂₂-(1,2-alkylene) radicals;
R² represents hydrogen or C₁-C₄-alkyl or C₇-C₂₂-aralkyl, wherein said C₇-C₂₂-aralkyl comprises phenyl, naphthyl or anthracyl;
n is an integer having a value of at least 5 to 100;
E3 is hydrogen in case E2 is a residue according to formula (IIa) or E3 is a residue according to formula (IIb);
E5 is hydrogen in case E4 is a residue according to formula (IIa) or E5 is a residue according to formula (IIb);
wherein 20 to 100% of the total amount of E2 and E4 is a residue according to formula (IIa) and 50 to 100% of the total amount of E1 is a residue according to formula (IIb).

2. The alkoxylated polyalkylene imine or alkoxylated polyamine according to claim 1, wherein R represents identical or different,
i) linear or branched C₂-C₁₂-alkylene radicals, preferably R is ethylene, propylene or hexamethylene, or
ii) C₅-C₁₀-cycloalkylene radicals optionally substituted with at least one C₁-C₃-alkyl, preferably R is at least one C₆-C₇-cycloalkylene radical substituted with at least one methyl or ethyl.

3. The alkoxylated polyalkylene imine or alkoxylated polyamine according to claim 1 or 2, wherein within formulas (IIa) and/or (IIb) the variables are each defined as follows:
R¹ represents 1,2-ethylene, 1,2-propylene or 1,2-butylene, most preferably 1,2-ethylene; and/or
R² represents hydrogen or C₁-C₄-alkyl, preferably hydrogen, methyl or ethyl, most preferably hydrogen; and/or
R³ represents linear or branched C₂-C₁₀-alkylene radicals, preferably linear or branched C₂-C₅-alkylene radicals; and/or
m is an integer having a value in the range of 1 to 5, preferably of 1 to 3; and/or
n is an integer having a value in the range of 8 to 40, preferably of 10 to 25; and/or
50 to 100%, preferably 80 to 100%, even more preferably 90 to 100%, most preferably more than 99% of the total amount of E2 and E4 is a residue according to formula (IIa) and 80 to 100%, most preferably 85 to 95% of the total amount of E1 is a residue according to formula (IIb).

4. The alkoxylated polyalkylene imine or alkoxylated polyamine according to any one of claims 1 to 3, wherein the weight average molecular weight (Mw) of the polyalkylene imine backbone or of the polyamine backbone lies in the range of 50 to 10 000 g/mol, preferably in the range of 500 to 5000 g/mol, more preferably in the range of 600 to 2000 g/mol, measured with the relevant method in accordance with the description .

5. The alkoxylated polyalkylene imine according to any of claims 1 to 4, wherein the variables are each defined as follows:
R is ethylene or propylene, preferably ethylene;
the sum of y+z is an integer having a value in the range of 9 to 120, preferably in the range of 10 to 20.

6. The alkoxylated polyalkylene imine according to claim 5, wherein
R is ethylene or propylene, preferably ethylene;
the sum of y+z is an integer having a value in the range of 9 to 120, preferably in the range of 10 to 20;
R¹ represents 1,2-ethylene;
R² represents hydrogen or C₁-C₄-alkyl, preferably hydrogen, methyl or ethyl, most preferably hydrogen;
R³ represents linear or branched C₂-C₁₀-alkylene radicals, preferably linear or branched C₂-C₅-alkylene radicals;
m is an integer having a value in the range of 1 to 5, preferably of 1 to 3;
n is an integer having a value in the range of 8 to 40, preferably of 10 to 25;
50 to 100%, preferably 80 to 100%, even more preferably 90 to 100%, most preferably more than 99% of the total amount of E2 and E4 is a residue according to formula (IIa) and 80 to 100%, most preferably 85 to 95% of the total amount of E1 is a residue according to formula (IIb).

7. The alkoxylated polyalkylene imine according to claim 5 or 6, wherein the variables are each defined as follows:
R is ethylene;
the sum of y+z is an integer having a value in the range of 10 to 20;
R¹ represents 1,2-ethylene;
R² represents hydrogen;
R³ represents linear or branched C₂-C₅-alkylene radicals;
m is an integer having a value in the range of 1 to 3;
n is an integer having a value in the range of 10 to 25;
wherein 90 to 100%, most preferably more than 99%, of the total amount of E2 and E4 is a residue according to formula (1Ia) and 85 to 95% of the total amount of E1 is a residue according to formula (IIb).

8. The alkoxylated polyamine according to any of claims 1 to 4, wherein
y is an integer having a value in the range of 0 to 10;
z is 0;
R represents identical or different, linear or branched C₂-C₁₂₋alkylene radicals or an etheralkyl unit according to formula (III), wherein
d is from 1 to 5, and
R¹⁰, R¹¹, R¹² are independently selected from linear or branched C₃ to C₄ alkylene radicals.

9. The alkoxylated polyamine according to claim 8, wherein
R¹ represents 1,2-ethylene;
R² represents hydrogen or C₁-C₄-alkyl, preferably hydrogen, methyl or ethyl, most preferably hydrogen;
R³ represents linear or branched C₂-C₁₀-alkylene radicals, preferably linear or branched C₂-C₅-alkylene radicals;
m is an integer having a value in the range of 1 to 5, preferably of 1 to 3;
n is an integer having a value in the range of 8 to 40, preferably of 10 to 25;
y is an integer having a value in the range of 1 to 10;
wherein 50 to 100%, preferably 80 to 100%, even more preferably 90 to 100%, most preferably more than 99%, of the total amount of E2 and E4 is a residue according to formula (Ila) and 80 to 100%, most preferably 90 to 100% of the total amount of E1 is a residue according to formula (IIb).

10. The alkoxylated polyamine according to claim 8 or 9, wherein
R is ethylene or propylene;
R¹ represents 1,2-ethylene;
R² represents hydrogen;
R³ represents linear or branched C₂-C₅-alkylene radicals;
m is an integer having a value in the range of 1 to 3;
n is an integer having a value in the range of 10 to 25;
y is an integer having a value in the range of 2 to 4;
wherein 90 to 100%, most preferably more than 99%, of the total amount of E2 and E4 is a residue according to formula (IIa) and 90 to 100% of the total amount of E1 is a residue according to formula (IIb).

11. The alkoxylated polyamine according to any of claims 1 to 4, wherein
y is 0;
z is 0;
R represents identical or different C₅-C₁₀-cycloalkylene radicals optionally substituted with at least one C₁-C₃-alkyl, preferably R is at least one C₆-C₇-cycloalkylene radical substituted with at least one methyl or ethyl, more preferably R is at least one C₆-cycloalkylene radical mono-substituted with methyl, or at least one C₇-alkylene radical substituted with at least one methyl, preferably trisubstituted with methyl, most preferably R is a mixture of 4-methyl-cyclohexane-1,3-diyl and 2-methyl-cyclohexane-1,3-diyl.

12. The alkoxylated polyalkylene imine or alkoxylated polyamine according to any one of claims 1 to 11, wherein up to 100% of the nitrogen atoms present in the alkoxylated polyalkylene imine or alkoxylated polyamine are quaternized, preferably the degree of quaternization of the nitrogen atoms present in the alkoxylated polyalkylene imine or alkoxylated polyamine lies in the range of 10% to 95%.

13. Use of the alkoxylated polyalkylene imine or alkoxylated polyamine according to any one of claims 1 to 12 in laundry detergents, in cleaning compositions, in fabric and home care products, in cosmetic formulations, as crude oil emulsion breaker, in pigment dispersions for ink jet inks, in formulations for electro plating, in cementitious compositions and/or as dispersant for agrochemical formulations, preferably in cleaning compositions and/or in fabric and home care products.

14. A process for preparing an alkoxylated polyalkylene imine or an alkoxylated polyamine according to claims 1 to 12, wherein a polyalkylene imine backbone or a polyamine backbone is first reacted with at least one lactone and/or at least one hydroxy carbon acid and then with at least one C₂-C₂₂-epoxide in order to obtain the respective alkoxylated compounds.

15. A process according to claim 14 in which, per mol of N-H functionalities in the polyalkylene imine or polyamine, the respective polyalkylene imine backbone or polyamine backbone is reacted with at least 0.05 moles, preferably at least 0.2 moles, of at least one lactone and/or at least one hydroxy carbon acid and then with at least 5 moles of least one C₂-C₂₂-epoxide.

16. A process according to claims 14 or 15 in which the alkoxylated polyalkylene imine or the alkoxylated polyamine is additionally quaternized.

17. A process according to any of claims 14 to 16, wherein the lactone is caprolactone, the hydroxy carbon acid is lactic acid and/or the C₂-C₂₂-epoxide is ethylene oxide.

18. Laundy detergent, cleaning composition, fabric and home care product, cosmetic formulation, crude oil emulsion breaker, pigment dispersion for ink jet inks, formulation for electro plating, cementitious composition and/or dispersant for agrochemical formulations, comprising at least one alkoxylated polyalkylene imine or alkoxylated polyamine according to any of claims 1 to 12,
preferably laundry detergent, cleaning composition and/or fabric and home care product, comprising at least one alkoxylated polyalkylene imine or alkoxylated polyamine according to any of claims 1 to 12.

## Patentansprüche

1. Alkoxyliertes Polyalkylenimin oder alkoxyliertes Polyamin der allgemeinen Formel (I) 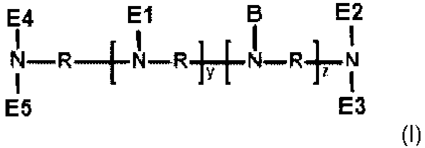 in der die Variablen jeweils wie folgt definiert sind:
R gleich oder verschieden steht für i) lineare oder verzweigte C₂-C₁₂-Alkylenreste oder ii) eine Etheralkyleinheit der folgenden Formel (III): 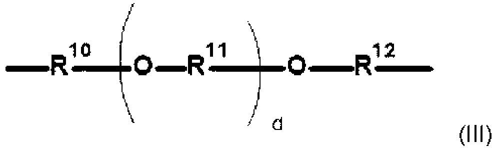
in der die Variablen jeweils wie folgt definiert sind:
R¹⁰, R¹¹, R¹² stehen für gleiche oder verschiedene, lineare oder verzweigte C₂-C₆-Alkylenreste und
d steht für eine ganze Zahl mit einem Wert im Bereich von 0 bis 50, oder
iii) C₅-C₁₀-Cycloalkylenreste, die gegebenenfalls durch mindestens ein C₁-C₃-Alkyl substituiert sind;
B steht für eine Fortsetzung des alkoxylierten Polyalkylenimins durch Verzweigung;
y und z stehen jeweils für eine ganze Zahl mit einem Wert im Bereich von 0 bis 150, mit der Maßgabe, dass sowohl z als auch y für 0 stehen, wenn die Variablen R für C₅-C₁₀-Cycloalkylenreste, die gegebenenfalls durch mindestens ein C₁-C₃-Alkyl substituiert sind, stehen;
E1, E2 und E4 stehen für einen gleichen oder verschiedenen Rest gemäß Formel (IIa) oder einen gleichen oder verschiedenen Rest gemäß Formel (IIb),
wobei es sich bei dem Rest gemäß Formel (IIa) um eine wie folgt definierte Alkylenoxyeinheit handelt: 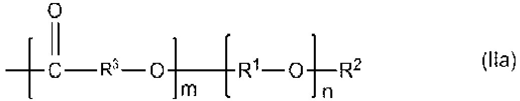
in der die Variablen jeweils wie folgt definiert sind:
R¹ steht für C₂-C₂₂-(1,2-Alkylen)reste;
R² steht für Wasserstoff oder C₁-C₄-Alkyl oder C₇-C₂₂-Aralkyl, wenn z in der allgemeinen Formel (I) eine ganze Zahl ≥ 1 ist, wobei das C₇-C₂₂-Aralkyl Phenyl, Naphthyl oder Anthracyl umfasst, oder
R² steht für Wasserstoff oder C₁-C₄-Alkyl oder C₂-C₂₂-Aralkyl, wenn z in der allgemeinen Formel (I) für 0 steht, wobei das C₇-C₂₂-Aralkyl Phenyl, Naphthyl oder Anthracyl umfasst;
R³ steht für lineare oder verzweigte C₁-C₂₂-Alkylenreste;
m steht für eine ganze Zahl mit einem Wert von mindestens 1 bis 10;
n steht für eine ganze Zahl mit einem Wert von mindestens 5 bis 100;
und wobei es sich bei dem Rest gemäß Formel (IIb) um eine wie folgt definierte Alkylenoxyeinheit handelt: 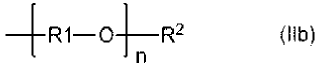
in der die Variablen wie folgt definiert sind:
R¹ steht für C₂-C₂₂-(1,2-Alkylen)reste;
R² steht für Wasserstoff oder C₁-C₄-Alkyl oder C₇-C₂₂-Aralkyl, wobei das C₇-C₂₂-Aralkyl Phenyl, Naphthyl oder Anthracyl umfasst;
n steht für eine ganze Zahl mit einem Wert von mindestens 5 bis 100;
E3 steht für Wasserstoff, wenn E2 für einen Rest gemäß Formel (IIa) steht, oder E3 steht für einen Rest gemäß Formel (IIb);
E5 steht für Wasserstoff, wenn E4 für einen Rest gemäß Formel (IIa) steht, oder E5 steht für einen Rest gemäß Formel (IIb);
wobei 20 bis 100 % der Gesamtmenge von E2 und E4 für einen Rest gemäß Formel (IIa) stehen und 50 bis 100 % der Gesamtmenge von E1 für einen Rest gemäß Formel (IIb) stehen.

2. Alkoxyliertes Polyalkylenimin oder alkoxyliertes Polyamin nach Anspruch 1, wobei R gleich oder verschieden für Folgendes steht:
i) lineare oder verzweigte C₂-C₁₂-Alkylenreste, vorzugsweise steht R für Ethylen, Propylen oder Hexamethylen, oder
ii) C₅-C₁₀-Cycloalkylenreste, die gegebenenfalls durch mindestens ein C₁-C₃-Alkyl substituiert sind, vorzugsweise steht R für mindestens einen C₆-C₇-Cycloalkylenrest, der durch mindestens ein Methyl oder Ethyl substituiert ist.

3. Alkoxyliertes Polyalkylenimin oder alkoxyliertes Polyamin nach Anspruch 1 oder 2, wobei in den Formeln (IIa) und/oder (IIb) die Variablen jeweils wie folgt definiert sind:
R¹ steht für 1,2-Ethylen, 1,2-Propylen oder 1,2-Butylen, ganz besonders bevorzugt 1,2-Ethylen; und/oder
R² steht für Wasserstoff oder C₁-C₄-Alkyl, vorzugsweise Wasserstoff, Methyl oder Ethyl, ganz besonders bevorzugt Wasserstoff; und/oder
R³ steht für lineare oder verzweigte C₂-C₁₀-Alkylenreste, vorzugsweise lineare oder verzweigte C₂-C₅-Alkylenreste; und/oder
m steht für eine ganze Zahl mit einem Wert im Bereich von 1 bis 5, vorzugsweise 1 bis 3; und/oder
n steht für eine ganze Zahl mit einem Wert im Bereich von 8 bis 40, vorzugsweise von 10 bis 25; und/oder
50 bis 100 %, vorzugsweise 80 bis 100 %, noch weiter bevorzugt 90 bis 100 %, ganz besonders bevorzugt mehr als 99 %, der Gesamtmenge von E2 und E4 stehen für einen Rest gemäß Formel (IIa) und 80 bis 100 %, ganz besonders bevorzugt 85 bis 95 %, der Gesamtmenge von E1 stehen für einen Rest gemäß Formel (IIb).

4. Alkoxyliertes Polyalkylenimin oder alkoxyliertes Polyamin nach einem der Ansprüche 1 bis 3, wobei das mit der relevanten Methode gemäß der Beschreibung gemessene gewichtsmittlere Molekulargewicht (Mw) der Polyalkylenimin-Hauptkette bzw. der Polyamin-Hauptkette im Bereich von 50 bis 10.000 g/mol, vorzugsweise im Bereich von 500 bis 5000 g/mol, weiter bevorzugt im Bereich von 600 bis 2000 g/mol, liegt.

5. Alkoxyliertes Polyalkylenimin nach einem der Ansprüche 1 bis 4, wobei die Variablen jeweils wie folgt definiert sind:
R steht für Propylen, vorzugsweise Ethylen;
die Summe von y+z ist eine ganze Zahl mit einem Wert im Bereich von 9 bis 120, vorzugsweise im Bereich von 10 bis 20.

6. Alkoxyliertes Polyalkylenimin nach Anspruch 5, wobei
R für Ethylen oder Propylen, vorzugsweise Ethylen, steht; die Summe von y+z eine ganze Zahl mit einem Wert im Bereich von 9 bis 120, vorzugsweise im Bereich von 10 bis 20, ist;
R¹ für 1,2-Ethylen steht;
R² für Wasserstoff oder C₁-C₄-Alkyl, vorzugsweise Wasserstoff, Methyl oder Ethyl, ganz besonders bevorzugt Wasserstoff, steht;
R³ für lineare oder verzweigte C₂-C₁₀-Alkylenreste, vorzugsweise lineare oder verzweigte C₂-C₅-Alkylenreste, steht;
m für eine ganze Zahl mit einem Wert im Bereich von 1 bis 5, vorzugsweise 1 bis 3, steht;
n für eine ganze Zahl mit einem Wert im Bereich von 8 bis 40, vorzugsweise von 10 bis 25, steht;
50 bis 100 %, vorzugsweise 80 bis 100 %, noch weiter bevorzugt 90 bis 100 %, ganz besonders bevorzugt mehr als 99 %, der Gesamtmenge von E2 und E4 für einen Rest gemäß Formel (IIa) stehen und 80 bis 100 %, ganz besonders bevorzugt 85 bis 95 %, der Gesamtmenge von E1 für einen Rest gemäß Formel (IIb) stehen.

7. Alkoxyliertes Polyalkylenimin nach Anspruch 5 oder 6, wobei die Variablen jeweils wie folgt definiert sind:
R steht für Ethylen;
die Summe von y+z ist eine ganze Zahl mit einem Wert im Bereich von 10 bis 20;
R¹ steht für 1,2-Ethylen;
R² steht für Wasserstoff;
R³ steht für lineare oder verzweigte C₂-C₅-Alkylenreste;
m steht für eine ganze Zahl mit einem Wert im Bereich von 1 bis 3;
n steht für eine ganze Zahl mit einem Wert im Bereich von 10 bis 25;
wobei 90 bis 100 %, ganz besonders bevorzugt mehr als 99 %, der Gesamtmenge von E2 und E4 für einen Rest gemäß Formel (IIa) stehen und 85 bis 95 % der Gesamtmenge von E1 für einen Rest gemäß Formel (IIb) stehen.

8. Alkoxyliertes Polyamin nach einem der Ansprüche 1 bis 4, wobei
y für eine ganze Zahl mit einem Wert im Bereich von 0 bis 10 steht;
z für 0 steht;
R gleich oder verschieden für lineare oder verzweigte C₂-C₁₂-Alkylenreste oder eine Etheralkyleinheit gemäß Formel (III) steht, wobei
d für 1 bis 5 steht und
R¹⁰, R¹¹, R¹² unabhängig aus linearen oder verzweigten C₃-C₄-Alkylenresten ausgewählt sind.

9. Alkoxyliertes Polyamin nach Anspruch 8, wobei
R¹ für 1,2-Ethylen steht;
R² für Wasserstoff oder C₁-C₄-Alkyl, vorzugsweise Wasserstoff, Methyl oder Ethyl, ganz besonders bevorzugt Wasserstoff, steht;
R³ für lineare oder verzweigte C₂-C₁₀-Alkylenreste, vorzugsweise lineare oder verzweigte C₂-C₅-Alkylenreste, steht;
m für eine ganze Zahl mit einem Wert im Bereich von 1 bis 5, vorzugsweise 1 bis 3, steht;
n für eine ganze Zahl mit einem Wert im Bereich von 8 bis 40, vorzugsweise von 10 bis 25, steht;
y für eine ganze Zahl mit einem Wert im Bereich von 1 bis 10 steht;
wobei 50 bis 100 %, vorzugsweise 80 bis 100 %, noch weiter bevorzugt 90 bis 100 %, ganz besonders bevorzugt mehr als 99 %, der Gesamtmenge von E2 und E4 für einen Rest gemäß Formel (IIa) stehen und 80 bis 100 %, ganz besonders bevorzugt 90 bis 100 %, der Gesamtmenge von E1 für einen Rest gemäß Formel (IIb) stehen.

10. Alkoxyliertes Polyamin nach Anspruch 8 oder 9, wobei
R für Ethylen oder Propylen steht;
R¹ für 1,2-Ethylen steht;
R² für Wasserstoff steht;
R³ für lineare oder verzweigte C₂-C₅-Alkylenreste steht;
m für eine ganze Zahl mit einem Wert im Bereich von 1 bis 3 steht;
n für eine ganze Zahl mit einem Wert im Bereich von 10 bis 25 steht;
y für eine ganze Zahl mit einem Wert im Bereich von 2 bis 4 steht;
wobei 90 bis 100 %, ganz besonders bevorzugt mehr als 99 %, der Gesamtmenge von E2 und E4 für einen Rest gemäß Formel (IIa) stehen und 90 bis 100 % der Gesamtmenge von E1 für einen Rest gemäß Formel (IIb) stehen.

11. Alkoxyliertes Polyamin nach einem der Ansprüche 1 bis 4, wobei
y für 0 steht;
z für 0 steht;
R für gleiche oder verschiedene C₅-C₁₀-Cycloalkylenreste, die gegebenenfalls durch mindestens ein C₁-C₃-Alkyl substituiert sind, steht;
vorzugsweise R für mindestens einen C₆-C₇-Cycloalkylenrest, der durch mindestens ein Methyl oder Ethyl substituiert ist, steht,
weiter bevorzugt R für mindestens einen C₆-Cycloalkylenrest, der einfach durch Methyl substituiert ist, oder mindestens einen C₇-Alkylenrest, der durch mindestens ein Methyl substituiert und vorzugsweise dreifach durch Methyl substituiert ist, steht,
ganz besonders bevorzugt R für eine Mischung von 4-Methylcyclohexan-1,3-diyl und 2-Methylcyclohexan-1,3-diyl steht.

12. Alkoxyliertes Polyalkylenimin oder alkoxyliertes Polyamin nach einem der Ansprüche 1 bis 11, wobei bis zu 100 % der in dem alkoxylierten Polyalkylenimin bzw. alkoxylierten Polyamin vorliegenden Stickstoffatome quaternisiert sind und der Quaternisierungsgrad der in dem alkoxylierten Polyalkylenimin bzw. alkoxylierten Polyamin vorliegenden Stickstoffatome vorzugsweise im Bereich von 10 % bis 95 % liegt.

13. Verwendung des alkoxylierten Polyalkylenimins oder alkoxylierten Polyamins nach einem der Ansprüche 1 bis 12 in Waschmitteln, in Reinigungsmitteln, in Textil- und Haushaltspflegeprodukten, in kosmetischen Formulierungen, als Rohölemulsionsbrecher, in Pigmentdispersionen für Tintenstrahltinten, in Formulierungen zur Galvanisierung, in zementösen Zusammensetzungen und/oder als Dispergiermittel für agrochemische Formulierungen, vorzugsweise in Reinigungsmitteln und/oder in Textil- und Haushaltspflegeprodukten.

14. Verfahren zur Herstellung eines alkoxylierten Polyalkylenimins oder eines alkoxylierten Polyamins nach einem der Ansprüche 1 bis 12, bei dem man eine Polyalkylenimin-Hauptkette bzw. eine Polyamin-Hauptkette zunächst mit mindestens einem Lacton und/oder mindestens einer Hydroxycarbonsäure und dann mit mindestens einem C₂-C₂₂-Epoxid zu den jeweiligen alkoxylierten Verbindungen umsetzt.

15. Verfahren nach Anspruch 14, bei dem pro Mol N-H-Funktionalitäten in dem Polyalkylenimin bzw. Polyamin die Polyalkylenimin-Hauptkette bzw. Polyamin-Hauptkette mit mindestens 0,05 mol, vorzugsweise mindestens 0,2 mol, mindestens eines Lactons und/oder mindestens einer Hydroxycarbonsäure und dann mit mindestens 5 mol mindestens eines C₂-C₂₂-Epoxids umgesetzt wird.

16. Verfahren nach Anspruch 14 oder 15, bei dem das alkoxylierte Polyalkylenimin bzw. das alkoxylierte Polyamin zusätzlich quaternisiert wird.

17. Verfahren nach einem der Ansprüche 14 bis 16, wobei es sich bei dem Lacton um Caprolacton handelt, es sich bei der Hydroxycarbonsäure um Milchsäure handelt und/oder es sich bei dem C₂-C₂₂-Epoxid um Ethylenoxid handelt.

18. Waschmittel, Reinigungsmittel, Textil- und Haushaltspflegeprodukt, kosmetische Formulierung, Rohölemulsionsbrecher, Pigmentdispersion für Tintenstrahltinten, Formulierung zur Galvanisierung, zementöse Zusammensetzung und/oder Dispergiermittel für agrochemische Formulierungen, umfassend mindestens ein alkoxyliertes Polyalkylenimin oder alkoxyliertes Polyamin nach einem der Ansprüche 1 bis 12, vorzugsweise Waschmittel, Reinigungsmittel und/oder Textil- und Haushaltspflegeprodukt, umfassend mindestens ein alkoxyliertes Polyalkylenimin oder alkoxyliertes Polyamin nach einem der Ansprüche 1 bis 12.

## Revendications

1. Polyalkylène imine alcoxylée ou polyamine alcoxylée de la formule générale (I) 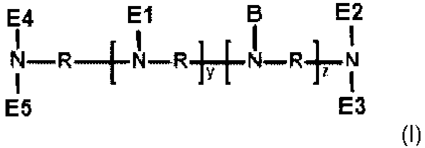 dans laquelle les variables sont chacune définies comme suit :
R représente i) des radicaux C₂-C₁₂-alkylène linéaires ou ramifiés ou ii) un motif étheralkyle de la formule suivante (III), identiques ou différents : 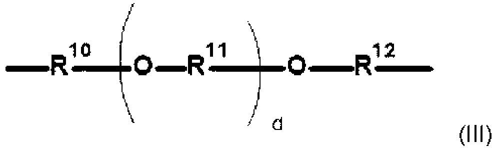
dans laquelle les variables sont chacune définies comme suit :
R¹⁰, R¹¹, R¹² représentent des radicaux C₂-C₆-alkylène identiques ou différents, linéaires ou ramifiés et
d est un entier ayant une valeur dans la plage de 0 à 50 ou
iii) des radicaux C₅-C₁₀-cycloalkylène éventuellement substitués par au moins un C₁-C₃-alkyle ;
B représente une continuation de la polyalkylène imine alcoxylée par ramification ;
y et z sont chacun un entier ayant une valeur dans la plage de 0 à 150, à la condition que les deux valeurs z et y soient 0 dans le cas où R sont des radicaux C₅-C₁₀-cycloalkylène éventuellement substitués par au moins un C₁-C₃-alkyle ;
E1, E2 et E4 représentent un radical identique ou différent selon la formule (IIa) ou un radical identique ou différent selon la formule (IIb),
dans laquelle le radical selon la formule (IIa) est un motif alkylèneoxy défini comme suit 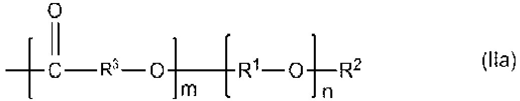
dans laquelle les variables sont chacune définies comme suit :
R¹ représente des radicaux C₂-C₂₂- (1,2-alkylène) ;
R² représente hydrogène ou C₁-C₄-alkyle ou C₇-C₂₂-aralkyle dans le cas où z est un entier ≥ 1 dans la formule générale (I), dans laquelle ledit C₇-C₂₂-aralkyle comprend phényle, naphtyle ou anthracyle ou
R² représente hydrogène ou C₁-C₄-alkyle ou C₇-C₂₂-aralkyle dans le cas où z est 0 dans la formule générale (I), dans laquelle ledit C₇-C₂₂-aralkyle comprend phényle, naphtyle ou anthracyle ;
R³ représente des radicaux C₁-C₂₂-alkylène linéaires ou ramifiés ;
m est un entier ayant une valeur d'au moins 1 à 10 ;
n est un entier ayant une valeur d'au moins 5 à 100 ;
et dans laquelle le radical selon la formule (IIb) est un motif alkylèneoxy défini comme suit 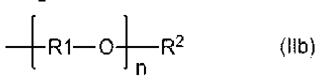
dans laquelle les variables sont définies comme suit :
R¹ représente des radicaux C₂-C₂₂-(1,2-alkylène) ;
R² représente hydrogène ou C₁-C₄-alkyle ou C₇-C₂₂-aralkyle, dans laquelle ledit C₇-C₂₂-aralkyle comprend phényle, naphtyle ou anthracyle ;
n est un entier ayant une valeur d'au moins 5 à 100 ;
E3 est hydrogène dans le cas où E2 est un radical selon la formule (IIa) ou E3 est un radical selon la formule (IIb) ;
E5 est hydrogène dans le cas où E4 est un radical selon la formule (IIa) ou E5 est un radical selon la formule (IIb) ;
dans laquelle 20 à 100 % de la quantité totale de E2 et E4 est un radical selon la formule (IIa) et 50 à 100 % de la quantité totale de E1 est un radical selon la formule (IIb).

2. Polyalkylène imine alcoxylée ou polyamine alcoxylée selon la revendication 1, dans laquelle R représente,
i) des radicaux C₂-C₁₂-alkylène linéaires ou ramifiés, préférablement R est éthylène, propylène ou hexaméthylène, ou
ii) des radicaux C₅-C₁₀-cycloalkylène éventuellement substitués par au moins un C₁-C₃-alkyle, préférablement R est au moins un radical C₆-C₇-cycloalkylène substitué par au moins un méthyle ou éthyle, identiques ou différents.

3. Polyalkylène imine alcoxylée ou polyamine alcoxylée selon la revendication 1 ou 2, dans laquelle, dans les formules (IIa) et/ou (IIb), les variables sont chacune définies comme suit :
R¹ représente 1,2-éthylène, 1,2-propylène ou 1,2-butylène, le plus préférablement 1,2-éthylène ; et/ou
R² représente hydrogène ou C₁-C₄-alkyle, préférablement hydrogène, méthyle ou éthyle, le plus préférablement hydrogène ; et/ou
R³ représente des radicaux C₂-C₁₀-alkylène linéaires ou ramifiés, préférablement des radicaux C₂-C₅-alkylène linéaires ou ramifiés ; et/ou
m est un entier ayant une valeur dans la plage de 1 à 5, préférablement de 1 à 3 ; et/ou
n est un entier ayant une valeur dans la plage de 8 à 40, préférablement de 10 à 25 ; et/ou
50 à 100 %, préférablement 80 à 100 %, encore plus préférablement 90 à 100 %, le plus préférablement plus de 99 % de la quantité totale de E2 et E4 est un radical selon la formule (IIa) et 80 à 100 %, le plus préférablement 85 à 95 % de la quantité totale de E1 est un radical selon la formule (IIb).

4. Polyalkylène imine alcoxylée ou polyamine alcoxylée selon l'une des revendications 1 à 3, dans laquelle le poids moléculaire moyen en poids (Mw) du squelette de polyalkylène imine ou du squelette de polyamine se situe dans la plage de 50 à 10 000 g/mole, préférablement dans la plage de 500 à 5 000 g/mole, plus préférablement dans la plage de 600 à 2 000 g/mole, mesurée avec le procédé approprié conformément à la description.

5. Polyalkylène imine alcoxylée selon l'une quelconque des revendications 1 à 4, dans laquelle les variables sont chacune définies comme suit :
R est éthylène ou propylène, préférablement éthylène ;
la somme de y+z est un entier ayant une valeur dans la plage de 9 à 120, préférablement dans la plage de 10 à 20.

6. Polyalkylène imine alcoxylée selon la revendication 5, dans laquelle
R est éthylène ou propylène, préférablement éthylène ; la somme de y+z est un entier ayant une valeur dans la plage de 9 à 120, préférablement dans la plage de 10 à 20 ;
R¹ représente 1,2-éthylène ;
R² représente hydrogène ou C₁-C₄-alkyle, préférablement hydrogène, méthyle ou éthyle, le plus préférablement hydrogène ;
R³ représente des radicaux C₂-C₁₀-alkylène linéaires ou ramifiés, préférablement des radicaux C₂-C₅-alkylène linéaires ou ramifiés ;
n est un entier ayant une valeur dans la plage de 1 à 5, préférablement de 1 à 3 ;
n est un entier ayant une valeur dans la plage de 8 à 40, préférablement de 10 à 25 ;
50 à 100 %, préférablement 80 à 100 %, encore plus préférablement 90 à 100 %, le plus préférablement plus de 99 % de la quantité totale de E2 et E4 est un radical selon la formule (IIa) et 80 à 100 %, le plus préférablement 85 à 95 % de la quantité totale de E1 est un radical selon la formule (IIb).

7. Polyalkylène imine alcoxylée selon la revendication 5 ou 6, dans laquelle les variables sont chacune définies comme suit :
R est éthylène ;
la somme de y+z est un entier ayant une valeur dans la plage de 10 à 20 ;
R¹ représente 1,2-éthylène ;
R² représente hydrogène ;
R³ représente des radicaux C₂-C₅-alkylène linéaires ou ramifiés ;
m est un entier ayant une valeur dans la plage de 1 à 3 ;
n est un entier ayant une valeur dans la plage de 10 à 25 ;
dans laquelle 90 à 100 %, le plus préférablement plus de 99 %, de la quantité totale de E2 et E4 est un radical selon la formule (IIa) et 85 à 95 % de la quantité totale de E1 est un radical selon la formule (IIb).

8. Polyamine alcoxylée selon l'une quelconque des revendications 1 à 4, dans laquelle
y est un entier ayant une valeur dans la plage de 0 à 10 ;
z est 0 ;
R représente des radicaux C₂-C₁₂-alkylène , linéaires ou ramifiés ou un motif étheralkyle, identiques ou différents selon la formule (III),
d est de 1 à 5, et
R¹⁰, R¹¹, R¹² sont indépendamment choisis parmi les radicaux C₃ to C₄ alkylène linéaires ou ramifiés.

9. Polyamine alcoxylée selon la revendication 8,
R¹ représente 1,2-éthylène ;
R² représente hydrogène ou C₁-C₄-alkyle, préférablement hydrogène, méthyle ou éthyle, le plus préférablement hydrogène ;
R³ représente des radicaux C₂-C₁₀-alkylène linéaires ou ramifiés, préférablement des radicaux C₂-C₅-alkylène linéaires ou ramifiés ;
n est un entier ayant une valeur dans la plage de 1 à 5, préférablement de 1 à 3 ;
n est un entier ayant une valeur dans la plage de 8 à 40, préférablement de 10 à 25 ;
y est un entier ayant une valeur dans la plage de 1 à 10 ;
dans laquelle 50 à 100 %, préférablement 80 à 100 %, encore plus préférablement 90 à 100 %, le plus préférablement plus de 99 %, de la quantité totale de E2 et E4 est un radical selon la formule (IIa) et 80 à 100 %, le plus préférablement 90 à 100 % de la quantité totale de E1 est un radical selon la formule (IIb).

10. Polyamine alcoxylée selon la revendication 8 ou 9, dans laquelle
R est éthylène ou propylène ;
R¹ représente 1,2-éthylène ;
R² représente hydrogène ;
R³ représente des radicaux C₂-C₅-alkylène linéaires ou ramifiés ;
m est un entier ayant une valeur dans la plage de 1 à 3 ;
n est un entier ayant une valeur dans la plage de 10 à 25 ;
y est un entier ayant une valeur dans la plage de 2 à 4 ; dans laquelle 90 à 100 %, le plus préférablement plus de 99 %, de la quantité totale de E2 et E4 est un radical selon la formule (IIa) et 90 à 100 % de la quantité totale de E1 est un radical selon la formule (IIb).

11. Polyamine alcoxylée selon l'une quelconque des revendications 1 à 4, dans laquelle
y est 0 ;
z est 0 ;
R représente des radicaux C₅-C₁₀-cycloalkylène identiques ou différents éventuellement substitués par au moins un C₁-C₃-alkyle,
préférablement R est au moins un radical C₆-C₇-cycloalkylène substitué par au moins un méthyle ou éthyle,
plus préférablement R est au moins un radical C₆-cycloalkylène monosubstitué par méthyle, ou au moins un radical C₇-alkylène substitué par au moins un méthyle, préférablement trisubstitué par méthyle,
le plus préférablement R est un mélange de 4-méthyl-cyclohexane-1,3-diyle et de 2-méthyl-cyclohexane-1,3-diyle.

12. Polyalkylène imine alcoxylée ou polyamine alcoxylée selon l'une quelconque des revendications 1 à 11, dans laquelle jusqu'à 100 % des atomes d'azote présents dans la polyalkylène imine alcoxylée ou la polyamine alcoxylée sont quaternisés, préférablement, le degré de quaternisation des atomes d'azote présents dans la polyalkylène imine alcoxylée ou la polyamine alcoxylée se situe dans la plage de 10 % à 95 %.

13. Utilisation de la polyalkylène imine alcoxylée ou de la polyamine alcoxylée selon l'une quelconque des revendications 1 à 12 dans les détergents pour le linge, dans les compositions de nettoyage, dans les produits d'entretien de tissus et ménagers, dans les formulations cosmétiques, comme agent de rupture d'émulsion d'huile brute, dans les dispersions de pigments pour les encres pour jet d'encre, dans les formulations pour l'électroplaquage, dans les compositions cimentaires et/ou comme dispersant pour les formulations agrochimiques, préférablement dans les compositions de nettoyage et/ou dans les produits d'entretien de tissus et ménagers.

14. Procédé pour la préparation d'une polyalkylène imine alcoxylée ou d'une polyamine alcoxylée selon les revendications 1 à 12, un squelette de polyalkylène imine ou un squelette de polyamine étant d'abord mis à réagir avec au moins une lactone et/ou au moins un acide carbonique hydroxylé et ensuite avec au moins un C₂-C₂₂-époxide afin d'obtenir les composés alcoxylés respectifs.

15. Procédé selon la revendication 14 dans lequel, par mole de fonctionnalités N-H dans la polyalkylène imine ou la polyamine, le squelette de polyalkylène imine ou le squelette de polyamine respectif est mis à réagir avec au moins 0,05 mole, préférablement au moins 0,2 mole, d'au moins une lactone et/ou d'au moins un acide carbonique hydroxylé et ensuite avec au moins 5 moles d'au moins un C₂-C₂₂-époxide.

16. Procédé selon les revendications 14 ou 15 dans lequel la polyalkylène imine alcoxylée ou la polyamine alcoxylée est de plus quaternisée.

17. Procédé selon l'une quelconque des revendications 14 à 16, dans lequel la lactone est la caprolactone, l'acide carbonique hydroxylé est l'acide lactique et/ou le C₂-C₂₂-époxide est l'oxyde d'éthylène.

18. Détergent pour le linge, composition de nettoyage, produit d'entretien de textiles et ménager, formulation cosmétique, agent de rupture d'émulsion d'huile brute, dispersion de pigments pour encres pour jet d'encre, formulation pour l'électroplaquage, composition cimentaire et/ou dispersant pour formulations agrochimiques, comprenant au moins une polyalkylène imine alcoxylée ou polyamine alcoxylée selon l'une quelconque des revendications 1 à 12,
préférablement détergent pour le linge, composition de nettoyage et/ou un produit d'entretien de tissus et ménager, comprenant au moins une polyalkylène imine alcoxylée ou une polyamine alcoxylée selon l'une quelconque des revendications 1 à 12.
